# EUROPEAN PATENT SPECIFICATION

(11) **EP 2 782 173 B1**
(45) Date of publication and mention of the grant of the patent: **07.11.2018**
(21) Application number: 12850644.1
(22) Date of filing: 14.11.2012
(51) Int. Cl.: H01M 2/16, H01M 4/58, H01M 4/62, H01M 10/0525, H01M 10/0567, C01B 33/26

(54) **USE OF MATERIAL IN A LITHIUM-ION RECHARGEABLE BATTERY MATERIAL AND LITHIUM-ION RECHARGEABLE BATTERY COMPRISING THE MATERIAL**
VERWENDUNG EINES MATERIALS IN EINEM LITHIUM-IONEN-AKKUMULATOR UND LITHIUM-IONEN-AKKUMULATOR MIT DIESEM MATERIAL
UTILISATION D'UN MATÉRIAU DANS UNE BATTERIE LITHIUM-ION RECHARGEABLE ET BATTERIE LITHIUM-ION RECHARGEABLE AVEC CET MATÉRIAU

(30) Priority: 15.11.2011 JP 2011250089; 15.11.2011 JP 2011250090; 15.11.2011 JP 2011250091; 15.11.2011 JP 2011250092; 15.11.2011 JP 2011250093
(43) Date of publication of application: 24.09.2014
(73) Proprietor: Hitachi Chemical Company, Ltd., Chiyoda-ku Tokyo 100-6606 (JP)
(72) Inventor: MIKUNI, Hiroki, Hitachi-shi Ibaraki 317-8555 (JP); KAWAI, Kiyoshi, Hitachinaka-shi Ibaraki 312-0003 (JP); KODATO, Katsunori, Hitachi-shi Ibaraki 316-0036 (JP)
(74) Representative: Hoffmann Eitle
(86) International application number: PCT/JP2012/079559
(87) International publication number: WO 2013/073594

(56) References cited:
- EP-A1- 2 138 227
- EP-A1- 2 322 479
- EP-A1- 2 684 847
- WO-A1-2009/084632
- JP-A- H11 260 416
- JP-A- 2001 064 010
- JP-A- 2006 216 373
- JP-A- 2008 179 533
- JP-A- 2010 021 056
- JP-A- 2011 241 132
- B. A. GOODMAN ET AL: "Structural studies of imogolite and allophanes by aluminum-27 and silicon-29 nuclear magnetic resonance spectroscopy", PHYSICS AND CHEMISTRY OF MINERALS, vol. 12, no. 6, 1 November 1985 (1985-11-01), pages 342-346, XP055063846, ISSN: 0342-1791, DOI: 10.1007/BF00654344

## Description

### Technical Field

The present invention relates to the use of a material in a lithium ion secondary battery .

### Background Art

Since a lithium ion secondary battery is lightweight and has high input/output characteristics compared to other secondary batteries, such as a nickel hydrogen battery or a lead accumulator battery, it has drawn attention recently as a high input/output power source to be used for an electric car, a hybrid electric car, *etc.*

However, when an impurity (a magnetic impurity such as Fe, Ni, and Cu) is present in a constituent material of a battery, the impurity may occasionally deposit on an anode during charging and discharging. The impurity deposited on an anode may possibly break through a separator and reach a cathode, which result in a short circuit.

Meanwhile, lithium ion secondary batteries may be used in summertime in cars or the like. In such a case, the working temperature of the lithium ion secondary batteries may rise to 40°C to 80°C. Then, the metal of a Li-containing metal oxide that forms the cathode may dissolve out from the cathode to deteriorate the battery characteristics.

For this reason, investigation on a scavenger or an adsorption agent for impurities (hereinafter referred to simply as "adsorption agent") and on stabilization of a cathode have been conducted (*e.g.* see Japanese Patent Application Laid-Open (JP-A) No. 2000-77103).

Further, for example, a nonaqueous lithium ion secondary battery, in which a cathode with a lithium compound as a cathode active material containing Fe or Mn as a metal element in constitutional elements, and an anode with a carbon material as an anode active material which is capable of occluding or releasing a lithium ion are placed apart in a nonaqueous electrolyte solution, wherein the cathode contains 0.5 to 5 wt% of zeolite with reference to the cathode active material, and the effective pore diameter of the zeolite is larger than the ion radius of the metal element but not more than 0.5 nm (5 A), has been disclosed (*e.g.* see JP-A No. 2010-129430).

EP 2 322 479 A1 describes a method of producing an amorphous aluminum silicate, wherein liquid glass and an aqueous solution of aluminum sulfate are mixed to achieve a Si/Al molar ratio of 0.70 to 1.0, acid or alkali is added thereto to achieve a pH of 6 to 9, and the solution is thereafter heated at 110°C or lower, and subsequently subjected to desalination treatment. The amorphous aluminum silicate produced by the method has peaks in a ²⁹Si solid state NMR spectrum in the vicinity of -78 ppm, -87 ppm and -92 ppm.

JP 11-260416 A describes a lithium secondary battery using an organic electrolyte solution and including a battery case, an internal electrode body contained in the battery case and including a positive electrode, a negative electrode and a separator made of porous polymer. The positive electrode and the negative electrode are wound or laminated so that the positive electrode and the negative electrode are not brought into direct contact with each other via the separator. A zeolite having a moisture absorption characteristic has been incorporated in the battery case so that the zeolite is brought into contact with the organic electrolyte solution within the battery case.

JP 2010 021056 A describes a fuel cell including an intermediate layer which inter alia contains a catalytic metal, an ionomer resin and a hydrophilic material. The hydrophilic material contains at least one fine powder of silicon dioxide, titanium dioxide and aluminosilicate (zeolite, imogolite).

### SUMMARY OF INVENTION

### Technical Problem

However, heretofore known adsorption agents cannot always adsorb an impurity with high selectivity, its adsorption capacity per unit mass is hardly sufficient, and moreover the lifetime characteristics cannot be always satisfactory.

An object of the present invention is to use a material in a lithium ion secondary battery, which is capable of selectively suppressing an increase in the concentration of an unwanted metal ion, as well as an anode for a lithium ion secondary battery, a cathode material for a lithium ion secondary battery, a cathode mix for a lithium ion secondary battery, a cathode for a lithium ion secondary battery, a separator for a lithium ion secondary battery, an electrolyte solution for a lithium ion secondary battery and a lithium ion secondary battery, which are produced using said material.

### Solution to Problem

Specific means for attaining the object are as follows:
<1> Use of a material in a lithium ion secondary battery, comprising an aluminum silicate having an element molar ratio Si/Al of silicon (Si) to aluminum (Al) of 0.4 to 0.6, wherein the aluminum silicate has a peak in the vicinity of 3 ppm in an ²⁷Al-NMR spectrum.
<2> The use according to <1> above, wherein the aluminum silicate has peaks in the vicinities of -78 ppm and -85 ppm in a ²⁹Si- NMR spectrum.
<3> The use according to <1> or <2> above, wherein the aluminum silicate has peaks in the vicinities of 20=26.9° and 40.3° and does not have peaks in the vicinities of 20=20° and 35° derived from a lamellar clay mineral, in a powder X-ray diffraction spectrum using a CuKa ray as a source X-ray.
<4> The use according to any one of <1> to <3> above, wherein an area ratio (Peak B/Peak A) of a peak B in the vicinity of -85 ppm to a peak A in the vicinity of -78 ppm of the aluminum silicate in the ²⁹Si-NMR spectrum is from 2.0 to 9.0.
<5> The use according to any one of <1> to <4> above, wherein a BET specific surface area of the aluminum silicate is 250 m²/g or more.
<6> An anode for a lithium ion secondary battery, comprising the material as defined in any one of <1> to <5> above.
<7> A lithium ion secondary battery, comprising:
   an anode for a lithium ion secondary battery as defined in <6> above;
   a cathode; and
   an electrolyte.
<8> A cathode for a lithium ion secondary battery, comprising:
   a current collector; and
   a cathode layer which comprises the material as defined in any one of <1> to <5> above and is provided on the current collector.
<9> A lithium ion secondary battery, comprising:
   the cathode for a lithium ion secondary battery according to <8> above;
   an anode; and
   an electrolyte.
<10> An electrolyte solution for a lithium ion secondary battery, comprising:
   an electrolyte;
   an organic solvent; and
   the material as defined in any one of <1> to <5> above.
<11> A separator for a lithium ion secondary battery, comprising:
   a separator substrate; and
   the material as defined in any one of <1> to <5> above.
      above.

### Effects of Invention

According to the invention, the use of a material in a lithium ion secondary battery, which is capable of selectively suppressing an increase in the concentration of an unwanted metal ion, is provided. Also, an anode for a lithium ion secondary battery, a cathode for a lithium ion secondary battery, a separator for a lithium ion secondary battery, an electrolyte solution for a lithium ion secondary battery, and a lithium ion secondary battery, which are produced using the above material are provided.

### BRIEF DESCRIPTION OF DRAWINGS

Figure 1 shows ²⁷Al-NMR spectra of the aluminum silicates with respect to Production Example 1 and Production Example 2.
Figure 2 shows ²⁹Si-NMR spectra of the aluminum silicates with respect to Production Example 1 and Production Example 2.
Figure 3 shows powder X-ray diffraction spectra of the aluminum silicates with respect to Production Example 1 and Production Example 2.
Figure 4 is a transmission electron micrograph (TEM) of the aluminum silicate with respect to Production Example 1.
Figure 5 is a transmission electron micrograph (TEM) of the aluminum silicate with respect to Production Example 2.
Figure 6 is a schematic diagram of a so-called imogolite in a tubular shape as an example of an embodiment of the present invention.

### DESCRIPTION OF EMBODIMENTS

The term "step" includes herein not only an independent step, but also a step which may not be clearly separated from another step, insofar as an intended function of the step can be attained. A numerical range expressed by "x to y" includes herein the values of x and y in the range as the minimum and maximum values, respectively. Further, in referring herein to a content of a component in a composition, when plural substances exist corresponding to a component in the composition, the content means, unless otherwise specified, the total amount of the plural substances existing in the composition.

Meanwhile, "(meth)acrylate" herein means "acrylate" and the corresponding "methacrylate". The same holds with respect to a similar expression such as "(meth)acrylic copolymer".

A thickness of a layer or a member in the invention is an average value of 5 measurements obtained using a micrometer manufactured by Mitutoyo Corporation.

### <Material for Lithium Ion Secondary Battery>

A material for a lithium ion secondary battery according to the invention is configured by containing an aluminum silicate having an element molar ratio of silicon (Si) to aluminum (Al) (Si/Al) of 0.4 to 0.6, wherein the aluminum silicate has a peak in the vicinity of 3 ppm in an ²⁷Al-NMR spectrum (hereinafter also referred to as "specific aluminum silicate"). The material for a lithium ion secondary battery may, if necessary, further contain another component.

The aluminum silicate having an element molar ratio of Si to Al (Si/Al) of 0.4 to 0.6 (hereinafter also referred to as "specific aluminum silicate") is an oxide salt of Si and Al. Since Si and Al have different valences, there are many OH groups in an oxide salt of Si and Al, which constitute ion exchange capacity. Therefore, a specific aluminum silicate has many adsorption sites for metal ions per unit mass, and as a result, it has a large specific surface area and an adsorption capacity with respect to metal ions with high selectivity. Especially, the specific aluminum silicate has a unique character that it does not substantially adsorb a lithium ion, which is essential for charging and discharging of a lithium ion battery, but adsorbs an unwanted metal ion.

In this regard, the unwanted metal ion in the invention means a nickel ion, a manganese ion, a copper ion, an iron ion, *etc.* other than the lithium ion. The unwanted metal ions are originated from impurity ions present in a constituent material of a battery or ions having dissolved out from a cathode at a high temperature.

Further, since the specific aluminum silicate is an inorganic oxide, it is superior in thermal stability, and stability in a solvent. Therefore, a specific aluminum silicate is capable of existing stably in a lithium ion secondary battery even during charging and discharging.

When a material for a lithium ion secondary battery contains a specific aluminum silicate, an unwanted metal ion, such as an impurity ion in a lithium ion secondary battery or a metal ion having dissolved out from a cathode, *etc.* is adsorbed by the specific aluminum silicate. As the result, an increase in the concentration of an unwanted metal ion in a battery can be selectively suppressed. In a lithium ion secondary battery containing the material for a lithium ion secondary battery, occurrence of a short circuit caused by an unwanted metal ion can be suppressed and the lithium ion secondary battery exhibits excellent lifetime characteristics.

Examples of the material for a lithium ion secondary battery include a cathode material, an anode, an electrolyte solution, a separator material, and a binder. By applying a material for a lithium ion secondary battery containing a specific aluminum silicate to the materials, occurrence of a short circuit caused by an unwanted metal ion can be suppressed and a lithium ion secondary battery exhibiting excellent lifetime characteristics can be provided.

When the material for a lithium ion secondary battery is applied to a cathode material, an unwanted metal ion, such as an impurity ion in a battery or an ion having dissolved out from a cathode, is adsorbed by the specific aluminum silicate. As the result, an increase in the concentration of an unwanted metal ion in a battery can be selectively suppressed. In a cathode for a lithium ion secondary battery and a lithium ion secondary battery using such a cathode material for a lithium ion secondary battery, occurrence of a short circuit can be suppressed and excellent lifetime characteristics can be obtained.

Especially, since an impurity ion is ionized at a cathode and a metal ion dissolves out from the cathode when a working temperature of a battery is high, the specific aluminum silicate contained in a cathode material can efficiently adsorb the dissolved metal ion.

When the material for a lithium ion secondary battery is applied to an anode, an unwanted metal ion in a lithium ion secondary battery can be adsorbed by the specific aluminum silicate. As the result, an increase in the concentration of an unwanted metal ion in a battery can be selectively suppressed. Especially, it is preferable that the specific aluminum silicate is applied to a surface of an anode. In a lithium ion secondary battery using such an anode for a lithium ion secondary battery, occurrence of a short circuit is suppressed and excellent lifetime characteristics can be obtained.

When the material for a lithium ion secondary battery is applied to an electrolyte solution, an increase in the concentration of an unwanted metal ion in a battery can be selectively suppressed. In a lithium ion secondary battery using such an electrolyte solution for a lithium ion secondary battery, occurrence of a short circuit is suppressed and excellent lifetime characteristics can be obtained. This is presumably because the specific aluminum silicate is, for example, superior in adsorption capacity for an unwanted metal ion, such as a manganese ion, a nickel ion, a copper ion, or an iron ion, while the adsorption capacity thereof for a lithium ion is relatively low, and therefore is capable of adsorbing efficiently a metal ion which may cause a short circuit.

When the material for a lithium ion secondary battery is applied to a separator, the separator is capable of adsorbing more efficiently unwanted metal ions, which move both to a cathode direction and to an anode direction passing through the separator as the result of charge and discharge of a lithium ion secondary battery.

When the material for a lithium ion secondary battery is applied to a binder, unwanted metal ions in a battery can be adsorbed by the specific aluminum silicate by adding or coating the binder containing the specific aluminum silicate to a constituent member of a lithium ion secondary battery. As the result, an increase in the concentration of an unwanted metal ion in a battery can be selectively suppressed. In a cathode for a lithium ion secondary battery and a lithium ion secondary battery using such a binder for a lithium ion secondary battery, occurrence of a short circuit is suppressed and excellent lifetime characteristics can be obtained.

Examples of the constituent member of a lithium ion secondary battery, to which the binder containing the specific aluminum silicate is added or coated, include an anode, a cathode, a separator, and an outer package. When the specific aluminum silicate in a state contained in a binder is applied to a constituent member of a lithium ion secondary battery, separation of the specific aluminum silicate from the constituent member during production of a battery is suppressed, and the specific aluminum silicate can be retained also during charging and discharging. Further, by using a binder containing a specific aluminum silicate as a binding agent for an anode active material or a cathode active material, the specific aluminum silicate can be distributed efficiently over surfaces of the respective active materials.

Details of the specific aluminum silicate will be described below.

### [Specific Aluminum Silicate]

The element molar ratio of Si to A1 (Si/Al) of a specific aluminum silicate is 0.4 to 0.6. The specific aluminum silicate is a substance different from zeolite, in which the element molar ratio Si/Al is 1.0 or higher.

An aluminum silicate with such a constitution is superior in adsorption capacity for an unwanted metal ion, such as a manganese ion, a nickel ion, a copper ion, or an iron ion, while adsorption capacity thereof for a lithium ion is relatively low. From the above, a metal ion, which may cause a short circuit, can be efficiently adsorbed.

Meanwhile, the specific aluminum silicate is an oxide salt containing Si and Al, and due to the difference in valences between Si and Al, there exist many OH groups. Presumably owing to this, the specific aluminum silicate exhibits excellent metal ion adsorption capacity and metal ion selectivity. Moreover, since the specific aluminum silicate is an inorganic oxide, it is superior in thermal stability and stability in a solvent. As the result, the specific aluminum silicate can, when contained in a constituent element of a lithium ion secondary battery, exist stably also during charging and discharging.

The element molar ratio of Si to Al (Si/Al) of aluminum silicate is 0.4 to 0.6, and preferably from 0.45 to 0.55.

When the element molar ratio Si/Al is less than 0.3, the amount of Al which does not contribute to the improvement of metal ion adsorption capacity of the aluminum silicate becomes excessive, and the ion adsorption capacity per unit mass decreases occasionally. Meanwhile, when the element molar ratio Si/Al is 1.0 or more, the amount of Si which does not contribute to the improvement of metal ion adsorption capacity of the aluminum silicate becomes excessive, and the ion adsorption capacity per unit mass decreases occasionally. Further, when the element molar ratio Si/Al is 1.0 or more, the selectivity of an adsorbed metal ion also decreases occasionally.

The element molar ratio Si/Al is determined by measuring the respective atom concentrations of Si and Al in a usual manner by an ICP emission spectroscopic analysis (e.g. ICP emission analyzer: P-4010, manufactured by Hitachi, Ltd.), and calculating based on the obtained atom concentrations.

The specific aluminum silicate has a peak in the vicinity of 3 ppm in a ²⁷Al-NMR spectrum. As a ²⁷Al-NMR analysis apparatus, for example, Model AV400WB of Bruker BioSpin can be used. Specific measurement conditions are as follows.
Resonance frequency: 104 MHz
Measuring method: MAS (single pulse)
MAS spinning speed: 10 kHz
Measurement region: 52 kHz
Data point number: 4096
Resolution (measurement region/data point number): 12.7 Hz
Pulse width: 3.0 µsec
Delay time: 2 sec
Chemical shift standard: 3.94 ppm of α-alumina
Window function: exponential function
Line broadening coefficient: 10 Hz

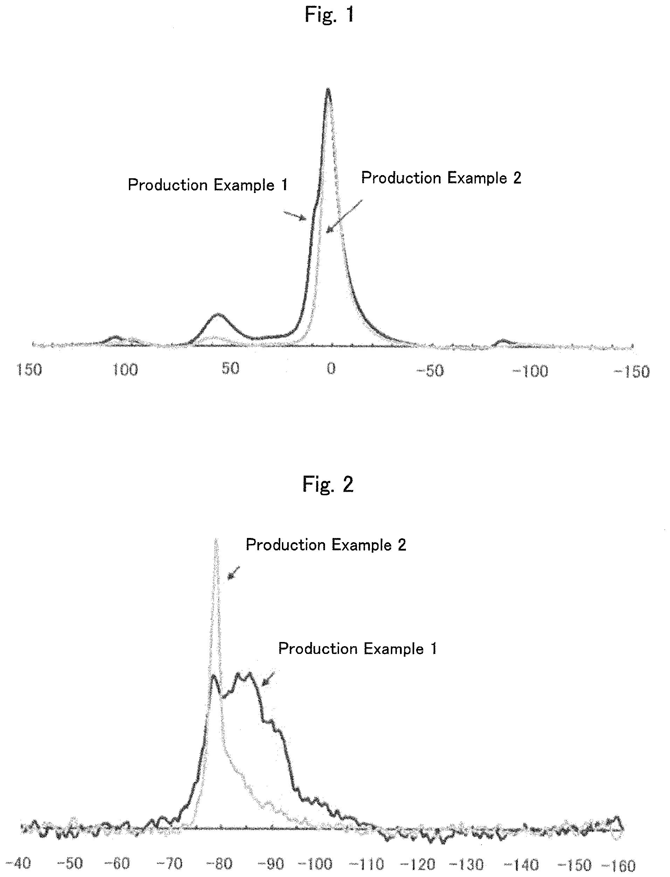

Figure 1 shows ²⁷Al-NMR spectra of aluminum silicates with respect to Production Example 1 and Production Example 2 described below, as examples of the specific aluminum silicate.

As shown in Figure 1, it is preferable that a specific aluminum silicate has a peak in the vicinity of 3 ppm in a ²⁷Al-NMR spectrum. It is presumed that the peak in the vicinity of 3 ppm is attributable to 6-coordinated Al. It may have additionally a peak in the vicinity of 55 ppm. Presumably, the peak in the vicinity of 55 ppm is attributable to 4-coordinated Al.

Regarding the specific aluminum silicate, from viewpoints of metal ion adsorption capacity and metal ion selectivity, an area ratio of the peak near 55 ppm to the peak in the vicinity of 3 ppm is preferably 25% or less, more preferably 20% or less, and further preferably 15% or less.

Further, regarding the specific aluminum silicate, an area ratio of the peak near 55 ppm to the peak in the vicinity of 3 ppm in a ²⁷Al-NMR spectrum is preferably 1% or more, more preferably 5% or more, and further preferably 10% or more, from viewpoints of metal ion adsorption capacity and metal ion selectivity.

The specific aluminum silicate has preferably peaks in the vicinity of -78 ppm and in the vicinity of -85ppm in an ²⁹Si-NMR spectrum. An aluminum silicate giving such a specific ²⁹Si-NMR spectrum exhibits improved metal ion adsorption capacity and metal ion selectivity.

As a ²⁹Si-NMR analysis apparatus, for example, Model AV400WB of Bruker BioSpin can be used. Specific measurement conditions are as follows.
Resonance frequency: 79.5 MHz
Measuring method: MAS (single pulse)
MAS spinning speed: 6 kHz
Measurement region: 24 kHz
Data point number: 2048
Resolution (measurement region/data point number): 5.8 Hz
Pulse width: 4.7 µsec
Delay time: 600 sec
Chemical shift standard: 1.52 ppm of TMSP-d₄ (sodium 3-(trimethylsilyl)[2,2,3,3-²H₄]propionate)
Window function: exponential function
Line broadening coefficient: 50 Hz

Figure 2 shows ²⁹Si-NMR spectra of aluminum silicates with respect to Production Example 1 and Production Example 2 described below as examples of the specific aluminum silicate.

As shown in Figure 2, it is preferable that a specific aluminum silicate has peaks in the vicinity of -78ppm and in the vicinity of -85 ppm in a ²⁹Si-NMR spectrum. It is presumed that the peak A appearing in the vicinity of -78 ppm is attributable to an aluminum silicate in a crystal structure such as imogolite or allophane, and specifically to a structure of HO-Si-(OAl)₃.

The peak B appearing in the vicinity of -85ppm is presumably attributable to an aluminum silicate in a clay structure or an aluminum silicate in an amorphous structure. Thus, the specific aluminum silicate having peaks in the vicinity of -78 ppm and in the vicinity of -85 ppm is presumably a mixture or a complex of an aluminum silicate in a crystal structure and an aluminum silicate in a clay structure or amorphous structure.

Especially in aluminum silicate having the peak A appearing in the vicinity of -78 ppm, there are many OH groups per unit mass. Therefore, it has been known that an aluminum silicate having a peak A appearing in the vicinity of -78 ppm is superior in moisture adsorption capacity. The inventors found that the aluminum silicate is superior also in ion adsorption capacity, in addition to the moisture adsorption capacity, and adsorbs selectively ions having negative influence on a battery. Especially, the inventors found a unique character of the aluminum silicate that it does not substantially adsorb a lithium ion essential for charge and discharge of a lithium ion battery, while adsorbs an impurity ion or an ion dissolved out from a cathode. From this reason, it is conceivable that occurrence of a short circuit over time in a lithium ion battery containing the specific aluminum silicate becomes significantly less, and as the result a lithium ion secondary battery superior in lifetime characteristics can be provided.

Meanwhile, the specific aluminum silicate does not need to have a peak in the vicinity of -110 ppm attributable to a lamellar clay mineral. In this regard, "no peak" means that a displacement from the baseline near -110 ppm is below a noise level, and specifically that the displacement from the baseline is 100% or less of the noise amplitude.

From a viewpoint of improvement of metal ion adsorption capacity and metal ion selectivity, the area ratio of a peak B in the vicinity of -85 ppm to a peak A in the vicinity of -78 ppm (Peak B/Peak A) of the specific aluminum silicate in the ²⁹Si-NMR spectrum is preferably from 0.4 to 9.0, more preferably 1.5 to 9.0, further preferably 2.0 to 9.0, still further preferably from 2.0 to 7.0, still further preferably from 2.0 to 5.0, and especially preferably from 2.0 to 4.0.

For determining the area ratio of the peaks in a ²⁹Si-NMR spectrum, firstly a baseline is drawn in the ²⁹Si-NMR spectrum. In Figure 2, a line joining -55 ppm and -140 ppm is defined as the baseline.

Next, the ²⁹Si-NMR spectrum curve is divided at a chemical shift (in Figure 2 near -81 ppm) corresponding to a trough between the peak appearing in the vicinity of -78 ppm and the peak in the vicinity of -85 ppm.

The area of the peak A in the vicinity of -78 ppm in Figure 2 is the area of a region surrounded by a line perpendicular to the chemical shift axis through -81 ppm, the baseline, and the ²⁹Si-NMR spectrum spectra curve. The area of the peak B is the area of a region surrounded by a line perpendicular to the chemical shift axis through -81 ppm, the baseline, and the ²⁹Si-NMR spectrum spectra curve.

The areas of the respective peaks may be determined by an analysis software built in an NMR analysis apparatus.

A specific aluminum silicate has preferably peaks in the vicinities of 2θ=26.9° and 40.3° in a powder X-ray diffraction spectrum using a CuKa ray as a source X-ray. The powder X-ray diffraction spectrum is measured using a CuKa ray as a source X-ray. As an X-ray diffraction apparatus, for example, GEIGERFLEX RAD-2X (trade name) manufactured by Rigaku Corporation may be used.

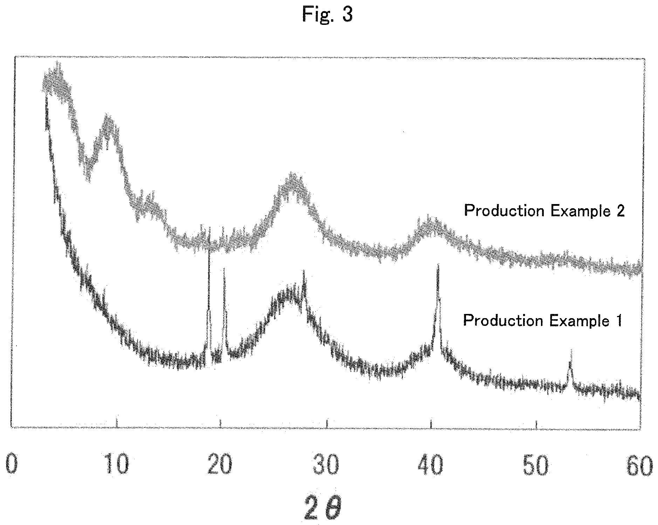

In Figure 3, powder X-ray diffraction spectra of the aluminum silicate with respect to Production Example 1 and Production Example 2 described below as examples of a specific aluminum silicate are shown.

As shown in Figure 3, the specific aluminum silicate has peaks in the vicinities of 2θ=26.9° and 40.3° in a powder X-ray diffraction spectrum. Presumably, the peaks in the vicinities of 2θ=26.9° and 40.3° are attributable to the specific aluminum silicate

The specific aluminum silicate does not need to have broad peaks in the vicinities of 2θ=20° and 35° in a powder X-ray diffraction spectrum. Presumably, the peaks in the vicinities of 2θ=20° and 35° are attributable to reflection at an (hk0) plane of a lamellar clay mineral having a low crystallinity.

In this regard, "no peak" in the vicinities of 2θ=20° and 35° means that a displacement from the baseline in the vicinity of 2θ=20° or 35° is below a noise level, and specifically that the displacement from the baseline is 100% or less of the noise amplitude.

Further, as in the case of the specific aluminum silicate with respect to Production Example 1, a specific aluminum silicate may have peaks in the vicinities of 2θ=18.8°, 20.3°, 27.8°, 40.6° and 53.3°. Presumably, the peaks in the vicinities of 2θ=18.8°, 20.3°, 27.8°, 40.6° and 53.3° are peaks attributable to a by-product aluminum hydroxide. In this regard, by setting a heating temperature during a heat treatment in a production method of a specific aluminum silicate described below at 160°C or less, precipitation of aluminum hydroxide can be suppressed. Further, by regulating the pH at a desalting treatment by centrifugation, the content of aluminum hydroxide can be regulated.

As the specific aluminum silicate with respect to Production Example 2, a specific aluminum silicate may have peaks in the vicinities of 2θ=4.8°, 9.7° and 14.0°. Further, it may have a peak in the vicinity of 2θ=18.3°. Presumably, the peaks in the vicinities of 2θ=4.8°, 9.7°, 14.0° and 18.3° are peaks attributable to a bundle structure of parallelly coagulated filaments of so-called imogolite, which is a tubular specific aluminum silicate.

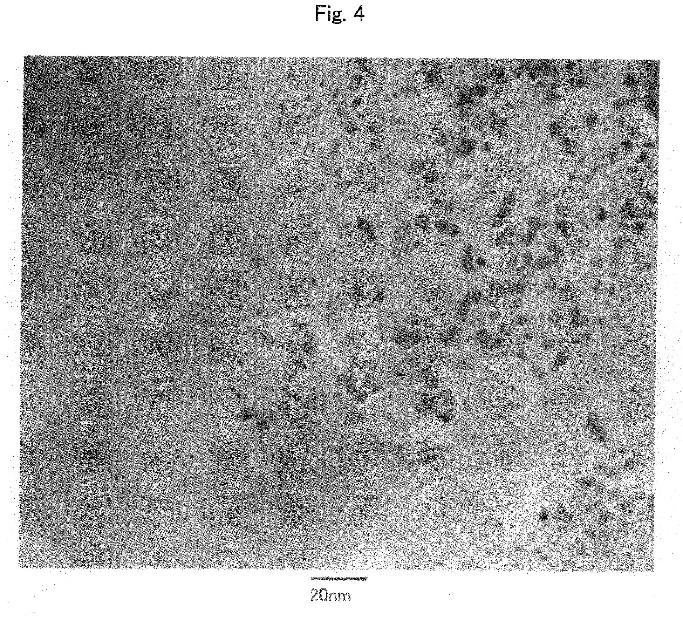

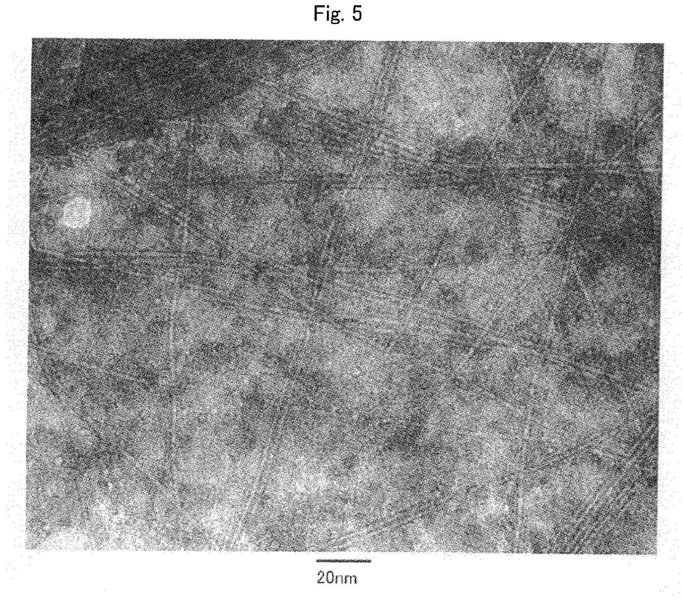

Each of Figure 4 and Figure 5 shows an example of a transmission electron micrograph (TEM) of a specific aluminum silicate. The specific aluminum silicate in Figure 4 is a specific aluminum silicate with respect to Production Example 1 described below. The specific aluminum silicate in Figure 5 is a specific aluminum silicate with respect to Production Example 2 described below.

As shown in Figure 4, in the specific aluminum silicate with respect to Production Example 1, there is no tubular object having a length of 50 nm or more, when observed by transmission electron microscopy (TEM) at a magnification of 100,000x. The specific aluminum silicate with respect to Production Example 2 is so-called imogolite in a tubular form as shown in Figure 5.

It is preferable that, in the specific aluminum silicate, there exists preferably no tubular object having a length of 50 nm or more, when observed by transmission electron microscopy (TEM) at a magnification of 100,000x, from viewpoints of metal ion adsorption capacity and metal ion selectivity.

An observation of a specific aluminum silicate by transmission electron microscopy (TEM) is conducted with an acceleration voltage of 100 kV. As for an observation sample, a thin film obtained by dropping a solution after heating before a second washing step (desalting and solid separation) in the production method described below onto a substrate for TEM observation sample preparation, followed by drying of the dropped solution after heating is used as a sample. When the contrast obtained in a TEM image is not sufficient, the solution after heating is diluted appropriately for preparing an observation sample to create adequate contrast

A tubular object as shown in Figure 5 is produced by carrying out a heat treatment when the concentrations of a silicate ion and an aluminum ion are lower than specific values in the production method of a specific aluminum silicate described below. On the other hand, an aluminum silicate, in which a tubular object is not recognized, as shown in Figure 4 is produced by carrying out a heat treatment when the concentrations of a silicate ion and an aluminum ion are at specific values or higher.

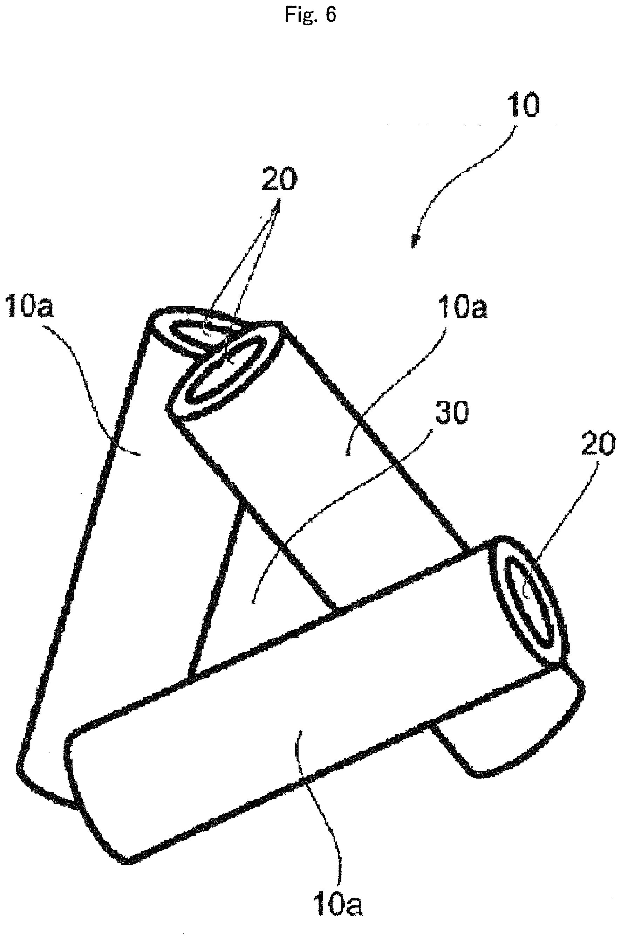

Figure 6 is a schematic diagram of a so-called imogolite in a tubular shape as an example of the specific aluminum silicate. As shown in Figure 6, the specific aluminum silicate 10 has a structure in which plural (3 in Figure 6) tubular bodies 10a are assembled. Between the plural tubular bodies 10a, gaps 30 defined by outer surfaces of the tubular bodies 10a are formed. The specific aluminum silicate 10 tends to form a fiber structure from the tubular bodies 10a, and an inner surface 20 inside a tube of the tubular body 10a and an outer surface (external circumferential surface) of the tubular body 10a which forms the gaps 30 between the tubular bodies 10a can be utilized as adsorption sites for a metal ion. The length of a tubular body 10a in the longitudinal direction thereof is, for example, 1 nm to 10 µm. A tubular body 10a is, for example, cylindrical, and the outer diameter thereof is, for example, from 1.5 nm to 3.0 nm, and the inner diameter thereof is, for example, from 0.7 nm to 1.4 nm.

When a filament of so-called imogolite, which is the specific aluminum silicate in a tubular shape, is recognized in a transmission electron micrograph (TEM), the peak B area of a ²⁹Si-NMR spectrum tends to be small.

From a viewpoint of improvement of metal ion adsorption capacity, the BET specific surface area of the specific aluminum silicate is preferably 250 m²/g or more, and more preferably 280 m²/g or more. When the BET specific surface area is 250 m²/g or more, the adsorption amount per unit mass of an impurity ion and a dissolved ion becomes larger to give high efficiency, and even a small amount can exert a large effect.

Although there is no particular restriction on the upper limit of the BET specific surface area, from a viewpoint that a part of Si and Al in the specific aluminum silicate bonds to form Si-O-Al which contributes to improvement of metal ion adsorption capacity, the BET specific surface area of the specific aluminum silicate is preferably 1500 m²/g or less, more preferably 1200 m²/g or less, and further preferably 1000 m²/g or less.

The BET specific surface area of a specific aluminum silicate is determined from nitrogen adsorption capacity according to JIS Z 8830. As a measurement apparatus, for example, AUTOSORB-1 (trade name; manufactured by Quantachrome Instruments) may be used. In measuring a BET specific surface area, a pretreatment for moisture removal by heating is firstly carried out, because moisture adsorbed on surfaces or in a structure of a sample is believed to influence the gas adsorption capacity.

In the pretreatment, 0.05g of a measurement sample is charged in a measurement cell, and the pressure in the measurement cell is then reduced to 10 Pa or less using a vacuum pump, followed by heating to 110°C, and keeping it for 3 hours or longer. The sample is then left standing to cool down to a normal temperature (25°C) while keeping the vacuum condition. After the pretreatment, a measurement is carried out at a measurement temperature of 77 K and within a measurement pressure range in terms of a relative pressure (equilibrium pressure to saturation vapor pressure) of less than 1.

From a viewpoint of improvement of adsorption capacity for a metal ion, the total pore volume of the specific aluminum silicate is preferably 0.1 cm³/g or more, more preferably 0.12 cm³/g or more, and further preferably 0.15 cm³/g or more. There is no particular restriction on the upper limit of the total pore volume. When the total pore volume is large, the adsorption amount per unit mass of moisture in the air becomes high. Therefore, the total pore volume is preferably 1.5 cm³/g or less, more preferably 1.2 cm³/g or less, and further preferably 1.0 cm³/g or less.

The total pore volume of a specific aluminum silicate is obtained by calculation of a gas adsorption amount at a relative pressure closest to 1 among the data obtained in a relative pressure range of 0.95 or more and less than 1, to a liquid volume, based on the BET specific surface area.

Since the ion radius of an impurity ion is from 0.01 nm to 0.1 nm, the average pore diameter of a specific aluminum silicate is preferably from 1.5 nm or more, and more preferably from 2.0 nm or more. When the average pore diameter is in the above ranges, impurity ions can be adsorbed efficiently even in a case in which the impurity ions move to an adsorption site in a state associated with a ligand. There is no particular restriction on the upper limit of an average pore diameter. Since the specific surface area decreases when the average pore diameter is large, the upper limit is preferably 50 nm or less, more preferably 20 nm or less, and further preferably 5.0 nm or less.

The average pore diameter of a specific aluminum silicate is obtained based on the BET specific surface area and the total pore volume, and assuming that all the pores are constituted with a single cylindrical pore.

The moisture content of the specific aluminum silicate is preferably 10 mass% or less, and more preferably 5 mass% or less. When the moisture content is 10 mass% or less, generation of a gas due to electrolysis of moisture in a lithium ion secondary battery to be configured can be suppressed to suppress battery expansion.

The moisture content can be measured by the Karl-Fischer method.

As a method for reducing the moisture content of a specific aluminum silicate to 10 mass% or less, a heating method used ordinarily can be applied without any particular restriction. Examples thereof include a heat treatment method in a range from 100°C to 300°C under an atmospheric pressure for 6 hours to 24 hours.

### [Production Method of Specific Aluminum Silicate]

A method of producing the specific aluminum silicate includes: (a) a step for mixing a solution containing a silicate ion and a solution containing an aluminum ion to yield a reaction product; (b) a step for desalting the reaction product and separating a solid therefrom; (c) a step for heat-treating the solid separated in the step (b) in an aqueous medium in the presence of an acid; and (d) a step for desalting the product of the heat treatment in the step (c) and separating a solid therefrom, and may be constituted by including, if necessary, another step.

A specific aluminum silicate superior in metal ion adsorption capacity can be produced efficiently by desalting a coexistent ion from a solution containing aluminum silicate as a reaction product, and then carrying out a heat treatment in the presence of an acid.

The above can be interpreted for example as follows. By a heat treatment, in the presence of an acid, of an aluminum silicate from which a coexistent ion that inhibits the formation of a regular structure is removed, a specific aluminum silicate having a regular structure is formed. It is assumed that when a specific aluminum silicate has a regular structure, the affinity to a metal ion is improved and the metal ion can be efficiently adsorbed.

### (a) Step for yielding Reaction Product

In a step for yielding a reaction product, a solution containing a silicate ion and a solution containing an aluminum ion are mixed to yield a mixed solution containing a reaction product including an aluminum silicate and a coexistent ion.

### (Silicate Ion and Aluminum Ion)

A silicate ion and an aluminum ion are necessary as source materials for producing aluminum silicate. There is no particular restriction on a silicate source composing the solution containing a silicate ion (hereinafter also referred to as "silicate solution"), insofar as the same generates a silicate ion when solvated. Examples of a silicate source includes, but not limited to, sodium orthosilicate, sodium metasilicate, and a tetraalkoxy silane such as tetraethoxy silane.

Meanwhile, there is no particular restriction on an aluminum source composing the solution containing an aluminum ion (hereinafter also referred to as "aluminum solution"), insofar as the same generates an aluminum ion when solvated. Examples of an aluminum source includes, but not limited to, aluminum chloride, aluminum perchlorate, aluminum nitrate, and aluminum sec-butoxide.

As the solvent, an appropriate solvent, which is capable of solvating easily with the silicate source and aluminum source as source materials, may be selected and used. Specifically, water, ethanol, or the like can be used as the solvent. From viewpoints of reduction of a coexistent ion in a solution during a heat treatment, and easy handling, use of water as a solvent is preferable.

### (Mixing Ratio and Solution Concentration)

Respective source materials are dissolved in solvents, respectively, to prepare source material solutions (silicate solution and aluminum solution), and the source material solutions are mixed each other to yield a mixed solution. The element molar ratio of Si to Al (Si/Al) in the mixed solution is adjusted to from 0.4 to 0.6, which corresponds to the element molar ratio Si/Al of Si and Al in the specific aluminum silicate to be produced, preferably adjusted to from 0.45 to 0.55. By adjusting the element molar ratio Si/Al to from 0.4 to 0.6, a specific aluminum silicate having a regular structure as desired can be synthesized more easily.

In mixing the source material solutions, it is preferable to add gradually the silicate solution to the aluminum solution. By the above procedure, polymerization of silicate, which may functions as an inhibitory factor for the formation of a desired specific aluminum silicate, can be suppressed.

There is no particular restriction on the silicon atom concentration in a silicate solution, and it is preferably from 1 mmol/L to 1000 mmol/L.

When the silicon atom concentration in a silicate solution is 1 mmol/L or more, the productivity is improved, and a specific aluminum silicate can be produced efficiently. Meanwhile, when the silicon atom concentration is 1000 mmol/L or less, the productivity is improved according to the silicon atom concentration.

There is no particular restriction on the aluminum atom concentration in an aluminum solution, and it is preferably from 100 mmol/L to 1000 mmol/L.

When the aluminum atom concentration in an aluminum solution is 100 mmol/L or more, the productivity is improved, and a specific aluminum silicate can be produced efficiently. Meanwhile, when the aluminum atom concentration is 1000 mmol/L or less, the productivity is improved according to the aluminum atom concentration.

### (b) First Washing Step (Desalting and Solid Separation)

A solution containing a silicate ion and a solution containing an aluminum ion are mixed to produce an aluminum silicate containing a coexistent ion as a reaction product in the obtained mixed solution, and the produced aluminum silicate containing a coexistent ion is then subjected to a first washing step for desalting and solid separation. In the first washing step, the coexistent ion concentration in the mixed solution is decreased by removing at least a part of the coexistent ion from the mixed solution. By carrying out the first washing step, a desired specific aluminum silicate can be formed more easily in a synthesis step.

There is no particular restriction on a method of desalting and solid separation in the first washing step, insofar as at least a part of an anion (chloride ion, nitrate ion, *etc*.) other than the silicate ion and a cation (*e.g.* sodium ion) other than the aluminum ion which are derived from the silicate source and the aluminum source can be removed (desalted) and solid separation can be carried out. Examples of a method for a first washing step include a method using centrifugation, a method using a dialysis membrane, and a method using an ion exchange resin.

A first washing step is preferably carried out to that the concentration of a coexistent ion in a mixed solution is decreased to a particular concentration or a lower concentration. For example, when a solid separated in the first washing step is dispersed in pure water at a concentration of 60 g/L, washing is conducted to the extent that the electric conductivity of the dispersion liquid is preferably as low as 4.0 S/m or less, more preferably as low as from 1.0 mS/m to 3.0 S/m, and still more preferably as low as from 1.0 mS/m to 2.0 S/m or less.

When the electric conductivity of a dispersion liquid is 4.0 S/m or less, there is a tendency that a desired specific aluminum silicate can be formed more easily at a synthesis step.

In this regard, electric conductivity is measured with F-55 manufactured by Horiba Ltd. and a general conductivity cell: 9382-10D from the same company at normal temperature (25°C).

The first washing step includes preferably a step for yielding a dispersion by dispersing the aluminum silicate in a solvent, a step for adjusting the dispersion to have a pH of from 5 to 8, and a step for precipitating the aluminum silicate.

For example, when a first washing step is conducted using centrifugation, this can be conducted as follows. An alkali or the like is added to the dispersion so as to adjust the pH thereof to within a range of from 5 to 8. The dispersion after pH adjustment is centrifuged and the supernatant solution is discarded to separate a solid as a gel precipitate. The separated solid is redispersed in a solvent. In this case, the same volume before the centrifugation is preferably recovered with the solvent. The redispersed dispersion liquid is centrifuged similarly to repeat the operation of desalting and solid separation for lowering the concentration of a coexistent ion to a particular concentration or a lower concentration.

In the first washing step, the pH of a dispersion is adjusted to, for example, within a range of from 5 and 8. The pH of the dispersion is preferably from 5.5 to 6.8, and more preferably from 5.8 to 6.5. There is no particular restriction on the alkali which is used for pH adjustment. As the alkali to be used for pH adjustment, for example, sodium hydroxide, and ammonia are preferable.

The conditions for centrifugation may be selected appropriately according to production scale, type or size of a used container, *etc.* The conditions for centrifugation may be, for example, at room temperature and 1200 G or more for 1 to 30 min. More particularly, the conditions for centrifugation may be, for example, such that a centrifuge SUPREMA 23 manufactured by Tomy Seiko Co., Ltd. is used with a standard rotor NA-16 from the same company, at room temperature and 3000 rpm (1450 G) or more, for 5 to 10 min.

As a solvent for the first washing step, any solvent which may easily solvate with a source material may be appropriately selected and used. Specific examples of the solvent include water and ethanol. As the solvent, use of water is preferable from viewpoints of reduction of a coexistent ion in a solution during synthesis with heating and easiness in handling, and more preferably pure water is used. When washing is repeated two or more times, the pH adjustment of a mixed solution should be preferably omitted.

The number of treatments of desalting and solid separation in a first washing step may be set appropriately depending on a remaining amount of a coexistent ion. It may be for example from 1 to 6 times. When washing is repeated approximately 3 times, the remaining amount of a coexistent ion is decreased to a level by which synthesis of a desired specific aluminum silicate is not influenced.

The pH measurement during pH adjustment can be performed by a pH meter with a common glass electrode. Specifically, for example, MODEL (F-51) (trade name) from Horiba, Ltd. can be used.

### (c) Synthesis Step

In a synthesis step, the separated solid obtained in the first washing step is subjected to a heating treatment in an aqueous medium in the presence of an acid.

By heat-treating the solution (dispersion liquid) containing an aluminum silicate with a reduced concentration of a coexistent ion obtained in the first washing step in the presence of an acid, a specific aluminum silicate having a regular structure can be formed.

In the synthesis step, synthesis may be performed in a dilute solution obtained by diluting appropriately the separated solid obtained in the first washing step, or synthesis may be performed with a high concentration solution of the separated solid obtained in the first washing step.

By performing a synthesis step in a dilute solution, a specific aluminum silicate having a structure in which a regular structure extends in a tubular form (hereinafter also referred to as "first specific aluminum silicate") can be obtained. Meanwhile, by performing a synthesis step in a high concentration solution, a specific aluminum silicate having a clay structure and an amorphous structure in addition to a regular structure (hereinafter also referred to as "second specific aluminum silicate") can be obtained. With respect to the second specific aluminum silicate, it is presumed that instead of growth to a tubular object having a length of 50 nm or more, formation of a clay structure and an amorphous structure is promoted.

Both a first and a second specific aluminum silicates exhibit excellent metal ion adsorption capacity owing to their specific regular structures.

For preparing a first specific aluminum silicate in a synthesis step, the dilute conditions of a solution may be, for example, as follows: the silicon atom concentration is 20 mmol/L or less, and the aluminum atom concentration is 60 mmol/L or less. Especially, from a viewpoint of metal ion adsorption capacity, as the dilute conditions, preferably the silicon atom concentration is from 0.1 mmol/L to 10 mmol/L and the aluminum atom concentration is from 0.1 mmol/L to 34 mmol/L, and more preferably the silicon atom concentration is from 0.1 mmol/L to 2 mmol/L and the aluminum atom concentration is from 0.1 mmol/L to 7 mmol/L.

By selecting the dilute conditions of the silicon atom concentration as 20 mmol/L or less and the aluminum atom concentration as 60 mmol/L or less, a first specific aluminum silicate can be produced efficiently.

For preparing a second specific aluminum silicate in the synthesis step, the high concentration conditions of a solution may be, for example, as follows: the silicon atom concentration is 100 mmol/L or more, and the aluminum atom concentration is 100 mmol/L or more. Especially, from a viewpoint of metal ion adsorption capacity, as the high concentration conditions, preferably the silicon atom concentration is from 120 mmol/L to 2000 mmol/L and the aluminum atom concentration is from 120 mmol/L to 2000 mmol/L, and more preferably the silicon atom concentration is from 150 mmol/L to 1500 mmol/L and the aluminum atom concentration is from 150 mmol/L to 1500 mmol/L.

By selecting the high concentration conditions of the silicon atom concentration as 100 mmol/L or more and the aluminum atom concentration as 100 mmol/L or more, a second specific aluminum silicate can be produced efficiently, and further the productivity of an aluminum silicate can be improved.

The above silicon atom concentration and aluminum atom concentration are a silicon atom concentration and an aluminum atom concentration of a solution of which pH is adjusted to a particular range by adding an acidic compound described below thereto. A silicon atom concentration and an aluminum atom concentration are measured using an ICP emission spectroscopic apparatus (e.g. ICP emission spectroscopic apparatus: P-4010, manufactured by Hitachi, Ltd.) in a conventional manner.

For adjusting a silicon atom concentration and an aluminum atom concentration to particular concentrations, a solvent may be added to the solution. As a solvent, any one which is easily capable of solvating with a source material may be selected appropriately. Specifically, water, ethanol, *etc.* may be used as a solvent, and use of water is preferable from viewpoints of reduction of a coexistent ion in a solution during a heat treatment, and easy handling.

At least one acidic compound is added to the solution before a heat treatment in the synthesis step. There is no particular restriction on the pH of the solution after addition of an acidic compound. The pH of the solution is preferably 3 or more and less than 7, and more preferably from 3 to 5, from a viewpoint of obtaining a desired aluminum silicate efficiently.

There is no particular restriction on an acidic compound to be added in the synthesis step, and it may be either of an organic acid and an inorganic acid. Especially, use of an inorganic acid is preferable. Specific examples of the inorganic acid include hydrochloric acid, perchloric acid, and nitric acid. Use of an acidic compound which forms substantially the same anion as the anion contained in a used aluminum source, is preferable, from a viewpoint of reduction of a coexistent ion species in a solution during a succeeding heat treatment.

A specific aluminum silicate having a desired structure can be obtained by performing a heat treatment after adding an acidic compound to the solution.

There is no particular restriction on the heating temperature. The heating temperature is preferably from 80°C to 160°C from a viewpoint of obtaining efficiently a desired specific aluminum silicate.

When the heating temperature is 160°C or less, there is a tendency that precipitation of boehmite (aluminum hydroxide) can be suppressed. Meanwhile, when the heating temperature is 80°C or more, there is a tendency that the synthesis speed of a desired specific aluminum silicate is improved and a desired specific aluminum silicate can be produced efficiently.

There is no particular restriction on the heating time. The heating time is preferably 96 hours (4 days) or less, from a viewpoint of obtaining more efficiently a specific aluminum silicate having a desired structure. When the heating time is 96 hours or less, a desired specific aluminum silicate can be produced more efficiently.

### (d) Second Washing Step (Desalting and Solid Separation)

A product obtained through the heat treatment in the synthesis step is then subjected to desalting and solid separation in a second washing step. From this, a specific aluminum silicate with superior metal ion adsorption capacity can be obtained. This can be explained as follows. Namely, in the product obtained through the heat treatment in the synthesis step, adsorption sites of a specific aluminum silicate may be occupied by a coexistent ion, and metal ion adsorption capacity may be occasionally not obtained as expected. Therefore, it is possible to consider that a specific aluminum silicate having superior metal ion adsorption capacity can be obtained by performing the second washing step for removing at least a part of a coexistent ion by desalting and solid separation from the specific aluminum silicate as a product obtained in the synthesis step.

It is enough if at least a part of an anion other than a silicate ion and a cation other than an aluminum ion can be removed by a washing treatment (desalting and solid separation) in the second washing step. The washing treatment to be applied to the second washing step may be the same as or different from the operation applied to the first washing step before the synthesis step.

The second washing step is preferably so performed that the concentration of a coexistent ion is decrease to a predetermined concentration or less. More specifically, for example, when a separated solid obtained in the second washing step is dispersed in pure water to a concentration of 60 g/L, the same is preferably so performed that the electric conductivity of the dispersion liquid becomes 4.0 S/m or less, more preferably so performed that the electric conductivity becomes between 1.0 mS/m and 3.0 S/m, and further preferably so performed that the electric conductivity becomes between 1.0 mS/m and 2.0 S/m.

When the electric conductivity of a dispersion liquid is 4.0 S/m or less, there is a tendency that a specific aluminum silicate having superior metal ion adsorption capacity can be obtained more easily.

When the second washing step is conducted using centrifugation, for example, it can be conducted as follows. A solvent is added to the product obtained through the heat treatment to yield a mixed solution. Then, an alkali, *etc.* is added to the mixed solution to adjust the pH thereof to 5 to 10. The mixed solution after the pH adjustment is centrifuged, and the supernatant solution is discarded to separate a sold as a gel precipitate. Then, the separated solid is redispersed in a solvent. In this case, the volume of the dispersion liquid is preferably returned to the same volume before the centrifugation. When the redispersed dispersion liquid is centrifuged similarly to repeat the operation of desalting and solid separation, the concentration of a coexistent ion can be lowered to a predetermined concentration or less.

In the second washing step, the pH of the mixed solution is adjusted preferably to from 5 to 10, and more preferably to from 8 to 10. There is no particular restriction on the alkali to be used for adjusting the pH. Preferable examples of an alkali to be used for adjusting the pH include sodium hydroxide and ammonia.

The conditions for centrifugation may be selected appropriately according to production scale, type or size of a used container, *etc.* The conditions for centrifugation may be, for example, at room temperature and 1200 G or more for 1 to 30 min. More particularly, the conditions for centrifugation may be, for example: a centrifuge SUPREMA 23 manufactured by Tomy Seiko Co., Ltd. being used with a standard rotor NA-16 from the same company, at room temperature and 3000 rpm (1450 G) or more, for 5 min to 10 min.

As a solvent for the second washing step, any solvent which is capable of easily solvating with the product of the heat treatment may be appropriately selected and used, and specific examples of the solvent include water and ethanol. As a solvent, use of water is preferable from viewpoints of reduction of a coexistent ion and easiness in handling, and more preferably pure water is used. When washing is repeated two or more times, the pH adjustment of the mixed solution should be preferably omitted.

The number of treatments of desalting and solid separation in the second washing step may be set depending on the amount of the remaining coexistent ion. The number of treatments for desalting and solid separation is preferably from 1 to 6, and more preferably approximately 3 times. By repeating washing approximately 3 times, the amount of the remaining coexistent ion in a specific aluminum silicate can be adequately reduced.

With respect to a dispersion liquid obtained through the second washing step, especially the concentrations of a chloride ion and a sodium ion, which have strong influence on the adsorption capacity of aluminum silicate among remaining coexistent ions, have been preferably reduced. Namely, with respect to a specific aluminum silicate after washing in the second washing step, when the specific aluminum silicate is dispersed in water to prepare an aqueous dispersion liquid with a concentration of 400 mg/L, in the aqueous dispersion liquid preferably the chloride ion concentration is 100 mg/L or less, and the sodium ion concentration is 100 mg/L or less. When the chloride ion concentration is 100 mg/L or less, and the sodium ion concentration is 100 mg/L or less, the adsorption capacity can be further improved. The chloride ion concentration is more preferably 50 mg/L or less, and further preferably 10 mg/L or less. The sodium ion concentration is more preferably 50 mg/L or less, and further preferably 10 mg/L or less. The chloride ion concentration and the sodium ion concentration can be adjusted by the number of treatments in the washing step or a kind of an alkali used for pH adjustment.

The chloride ion concentration and sodium ion concentration are measured by ion chromatography (e.g. DX-320 and DX-100 manufactured by Dionex) under ordinary conditions.

The concentration of a dispersion of a specific aluminum silicate is based on a solid mass obtained by drying a separated solid at 110°C for 24hours.

The expression of a "dispersion liquid after the second washing step" in the above means a dispersion liquid after the second washing step, of which volume has been returned to the same volume before the second washing step with a solvent. As the solvent to be used, any solvent which is capable of easily solvating with a source material may be selected appropriately, and specifically, water, ethanol, *etc.* may be used. However, use of water is preferable from viewpoints of reduction of the amount of the remaining coexistent ion in a specific aluminum silicate, and easy handling.

The BET specific surface area of the specific aluminum silicate can be adjusted by a treatment method in the second washing step (for example, a method performing once or 2 or more times the procedures that an alkali is added to a synthesis solution to adjust the pH between 5 and 10, the solution is centrifuged, the supernatant solution is discarded, and an aluminum silicate remained as a gel precipitate is redispersed in a solvent to return to the volume before centrifugation).

The total pore volume of a specific aluminum silicate can be adjusted by a treatment method in the second washing step (for example, a method performing once or 2 or more times the procedures that an alkali is added to a synthesis solution to adjust the pH between 5 and 10, the solution is centrifuged, the supernatant solution is discarded, and an aluminum silicate remained as a gel precipitate is redispersed in a solvent to return to the volume before centrifugation).

The average pore diameter of a specific aluminum silicate can be adjusted by a treatment method in the second washing step (for example, a method performing once or 2 or more times the procedures that an alkali is added to a synthesis solution to adjust the pH between 5 and 10, the solution is centrifuged, the supernatant solution is discarded, and an aluminum silicate remained as a gel precipitate is redispersed in a solvent to return to the volume before centrifugation).

Examples of a preferable embodiment of the specific aluminum silicate include the following.
1) An aluminum silicate:
   which has an element molar ratio (Si/Al) of Si to Al of from 0.4 to 0.6;
   which has a peak in the vicinity of 3 ppm in an ²⁷Al-NMR spectrum;
   which has peaks in the vicinities of -78 ppm and -85 ppm in an ²⁹Si-NMR spectrum;
   wherein the area ratio (peak B/peak A) of a peak B in the vicinity of -85 ppm to a peak A in the vicinity of -78 ppm in an ²⁹Si-NMR spectrum is from 2.0 to 9.0; and
   which has peaks in the vicinities of 20=26.9° and 40.3° in a powder X-ray diffraction spectrum using a CuKa ray as a source X-ray, but no peaks in the vicinities of 2θ=20° and 35° attributable to a lamellar clay mineral.
2) An aluminum silicate:
   which has an element molar ratio of Si to Al (Si/Al) from 0.4 to 0.6;
   which has a peak in the vicinity of 3 ppm in an ²⁷Al-NMR spectrum;
   which has peaks in the vicinities of -78 ppm and -85 ppm in an ²⁹Si-NMR spectrum;
   wherein the area ratio (peak B/peak A) of a peak B in the vicinity of -85 ppm to a peak A in the vicinity of -78 ppm in an ²⁹Si-NMR spectrum is from 2.0 to 4.0; and
   which has peaks in the vicinities of 20=26.9° and 40.3° in a powder X-ray diffraction spectrum using a CuKa ray as a source X-ray, but no peaks in the vicinities of 2θ=20° and 35° attributable to a lamellar clay mineral.
3) An aluminum silicate:
   which has an element molar ratio of Si to Al (Si/Al) from 0.45 to 0.55;
   which has a peak in the vicinity of 3 ppm in an ²⁷Al-NMR spectrum;
   which has peaks in the vicinities of -78 ppm and -85 ppm in an ²⁹Si-NMR spectrum;
   wherein the area ratio (peak B/peak A) of peak B in the vicinity of -85 ppm to peak A in the vicinity of -78 ppm in an ²⁹Si-NMR spectrum is from 2.0 to 5.0; and
   which has peaks in the vicinities of 20=26.9° and 40.3° in a powder X-ray diffraction spectrum using a CuKa ray as a source X-ray, but no peaks in the vicinities of 20=20° and 35° attributable to a lamellar clay mineral.

   The preferable embodiments 1) to 3) of the specific aluminum silicate may be the following more preferable embodiments:
4) any of the above 1) to 3), which has a BET specific surface area of 250m²/g or more, a total pore volume of from 0.1 cm³/g to 1.0 cm³/g, and an average pore diameter of 1.5 nm or more;
5) any of the above 1) to 3), which has a BET specific surface area of 280m²/g or more, a total pore volume of from 0.1 cm³/g to 1.5 cm³/g, and an average pore diameter of from 1.5 nm to 20 nm;
6) any of the above 1) to 3), which has a BET specific surface area of from 250 m²/g to 1200 m²/g, a total pore volume of from 0.1 cm³/g to 1.5 cm³/g, and an average pore diameter of from 1.5 nm to 20 nm;
7) any of the above 1) to 3), which has a BET specific surface area of from 280 m²/g to 1000 m²/g, a total pore volume of from 0.1 cm³/g to 1.0 cm³/g, and an average pore diameter of from 1.5 nm to 5.0 nm.

### <Lithium Ion Secondary Battery>

A lithium ion secondary battery according to the invention includes: a cathode; an anode; and an electrolyte solution; and may have, if necessary, another constituent such as a separator. The lithium ion secondary battery may contain the material for a lithium ion secondary battery in the respective constituents constituting a lithium ion secondary battery, or as a component of the constituents. Examples of constituents of a lithium ion secondary battery or components, which can contain the material for a lithium ion secondary battery, include a cathode material, a cathode mix, a cathode, an anode, an electrolyte solution, a separator and a binder. It is enough if at least one of the constituents or components of a lithium ion secondary battery according to the invention contains the material for a lithium ion secondary battery.

As the lithium ion secondary battery, a battery in which at least one selected from the group consisting of an anode for a lithium ion secondary battery (hereinafter occasionally simply referred to as "anode"), a cathode for a lithium ion secondary battery (hereinafter occasionally simply referred to as "cathode"), an electrolyte solution for a lithium ion secondary battery (hereinafter occasionally simply referred to as "electrolyte solution"), a separator for a lithium ion secondary battery (hereinafter occasionally simply referred to as "separator"), and a binder for a lithium ion secondary battery (hereinafter occasionally simply referred to as "binder"), contains the material for a lithium ion secondary battery, is preferable. In this regard, the cathode for a lithium ion secondary battery may be any of a cathode material for a lithium ion secondary battery containing the material for a lithium ion secondary battery, a cathode mix for a lithium ion secondary battery containing the cathode material for a lithium ion secondary battery and a binder, or a cathode for a lithium ion secondary battery having a current collector and a cathode layer provided on the current collector and including the cathode for a lithium ion secondary battery.

Examples of a constituent of a lithium ion secondary battery and a component that can contain the material for a lithium ion secondary battery include a combination of a cathode and an anode, a combination of a cathode, an anode, and a separator, a combination of a cathode, an anode, a separator, and an electrolyte solution, a combination of a separator, and an electrolyte solution, and a combination of a cathode, an anode, a separator, an electrolyte solution, and a binder.

When two or more of the constituents and components that contain the material for a lithium ion secondary battery are combined, it is enough if the lower limit of the content of a specific aluminum silicate allows the applied constituent or component to exhibit an intended effect favorably. When two or more of the constituents and components that contain the material for a lithium ion secondary battery are combined, the upper limit of the content of a specific aluminum silicate is preferably 40 mass% or less with reference to the total mass of the plural members containing a specific aluminum silicate, and more preferably 20 mass% or less. When the content is 40 mass% or less, a balance between the content of a specific aluminum silicate as an insulator and the electrical resistance of a lithium ion secondary battery can be maintained favorably.

The invention preferably includes the following embodiments.
(1) A cathode for a lithium ion secondary battery including a current collector, and a cathode layer which contains the specific aluminum silicate and which is provided on the current collector; and a lithium ion secondary battery including the cathode, an anode and an electrolyte.
(2) An anode for a lithium ion secondary battery containing the specific aluminum silicate; and a lithium ion secondary battery including the anode for a lithium ion secondary battery, a cathode, and an electrolyte.
(3) An electrolyte solution for a lithium ion secondary battery containing the electrolyte, an organic solvent, and a specific aluminum silicate.
(4) A separator for a lithium ion secondary battery containing a separator substrate, and the specific aluminum silicate.

In (1) to (4) above, the specific aluminum silicate has the following characteristics (a) and (c) and may have at least one of the following characteristics of (b) and (d) to (h):
(a) there is a peak in the vicinity of 3 ppm in a ²⁷Al-NMR spectrum;
(b) there are peaks in the vicinities of -78 ppm and -85 ppm in a ²⁹Si-NMR spectrum;
(c) the element molar ratio Si/Al is from 0.4 to 0.6;
(d) there are peaks in the vicinities of 20=26.9° and 40.3° in a powder X-ray diffraction spectrum using a CuKa ray as a source X-ray, but there is no peak in the vicinities of 20=20° and 35° attributable to a lamellar clay mineral;
(e) the area ratio of the peak B in the vicinity of -85 ppm to the peak A in the vicinity of -78 ppm (Peak B/Peak A) in the ²⁹Si-NMR spectrum is from 2.0 to 9.0;
(f) the BET specific surface area is 250 m²/g or more; and
(g) the moisture content is 10 mass% or less.

### [Cathode]

### (1) Cathode Active Material

As the cathode active material, a cathode active material used ordinarily for a cathode for a lithium ion secondary battery may be applied. Examples of the cathode active material include a metallic compound, a metal oxide, a metal sulfide, and an electrically conductive polymer material, which is capable of being doped or intercalated with a lithium ion. Specific examples of the cathode active material include lithium cobalt oxide (LiCoO₂), lithium nickelate (LiNiO₂), lithium manganate (LiMnO₂), and double oxides thereof (LiCoₓNi_{y}Mn_{z}O₂, x+y+z=1, 0<x, 0<y; LiNi₂₋ₓMnₓO₄, 0<x≤2), lithium manganese spinel (LiMn₂O₄); a lithium vanadium compound, V₂O₅, V₆O₁₃, VO₂, MnO₂, TiO₂, MoV₂O₈, TiS₂, V₂S₅, VS₂, MoS₂, MoS₃, Cr₃O₈, Cr₂O₅, olivine-type LiMPO₄ (M: Co, Ni, Mn, Fe); an electrically conductive polymer, such as polyacetylene, polyaniline, polypyrrole, polythiophene, and polyacene; and porous carbon, which may be used singly or in a combination of 2 or more.

A cathode material for a lithium ion secondary battery may contain the specific aluminum silicate. When a cathode material contains the specific aluminum silicate, an impurity ion ionized at a cathode or a metal ion dissolved out from a cathode can be scavenged by the specific aluminum silicate. By this means, deposit of a metal on an anode caused by reduction of a metal ion at an anode can be suppressed. As the result, a short circuit of a battery is suppressed. Further, dissolving out of a metal ion from a cathode can be suppressed. As the result, electrical conductivity among cathode active materials can be maintained and deterioration of the battery performance can be suppressed.

In applying the specific aluminum silicate to a cathode material, there is no particular restriction on other composition of the cathode, insofar as the specific aluminum silicate is contained in a cathode material from a viewpoint of effective trap of an impurity ion and a dissolved ion by the specific aluminum silicate.

From a viewpoint of effective trap of a metal ion dissolving out from a cathode, it is preferable that the specific aluminum silicate is present around a cathode active material, and examples thereof include a form in which a specific aluminum silicate is coated on a particle surface of a cathode active material.

When a specific aluminum silicate is added to a cathode material, there is no particular restriction on the form of a specific aluminum silicate, and it may be any of forms of powder, aqueous dispersion, organic solvent dispersion, gel, *etc.*

There is no particular restriction on a method of adding a specific aluminum silicate to a cathode material, and examples thereof include (1) a method, by which a cathode material is added to a dispersion liquid or a gel of aluminum silicate and the mixture is dried, (2) a method by mechanofusion, and (3) a method, by which a cathode material and a solid specific aluminum silicate are simply mixed together. As methods for applying a specific aluminum silicate on to a particle surface of a cathode active material, from a viewpoint of effective trap of a metal ion dissolving out from a cathode, the method (1) and (2) are preferable.

Although a cathode material may be in a form of a dispersion liquid or a gel form, which are formed by adding a cathode material to a dispersion liquid or a gel of aluminum silicate, a dry form after removal of a solvent is appropriate for the reason of transportation cost, stability of properties, *etc.* In producing a cathode, the dried product is preferably dispersed in an appropriate solvent to form a cathode mix slurry and used. By forming a cathode mix slurry, a cathode material can be applied to a current collector more uniformly.

### (2) Cathode Mix

A cathode material may be mixed with a binder to form a cathode mix. By including a binder superior adhesiveness is imparted, and a cathode material, *etc.* can be bonded effectively to a cathode current collector. A conductive additive may be further added to the cathode mix.

Examples of the binder include, but not limited to, a styrene-butadiene copolymer; a (meth) acrylic copolymer obtained by copolymerizing an ethylenic unsaturated carboxylic acid ester, such as methyl (meth)acrylate, ethyl (meth)acrylate, butyl (meth)acrylate, (meth) acrylonitrile, and hydroxyethyl (meth)acrylate, and an ethylenic unsaturated carboxylic acid, such as acrylic acid, methacrylic acid, itaconic acid, fumaric acid, and maleic acid; and a polymer, such as polyvinylidene fluoride, polyethylene oxide, polyepichlorohydrin, polyphosphazene, polyacrylonitrile, polyimide, and polyamide imide. Especially, polyvinylidene-fluoride (PVDF) is preferable, because it is superior in durability, and especially swelling resistance.

Examples of the conductive additive include carbon black, such as Ketjen black, acetylene black, channel black, furnace black, lamp black, and thermal black; graphite, such as natural graphite like squamous graphite, artificial graphite, and expanded graphite; a conductive fiber, such as a carbon fiber, and a metal fiber; metal powders of copper, silver, nickel, aluminum, *etc*.; and an organic electrically conductive material, such as a polyphenylene derivative. The conductive additives may be used singly, or as a mixture of plural kinds thereof.

When a specific aluminum silicate is used, the applied amount of a specific aluminum silicate in a cathode layer obtained by using a cathode mix is preferably from 0.01 g/m² to 50 g/m², more preferably from 0.05 g/m² to 30 g/m², and further preferably from 0.1 g/m² to 20 g/m². When the applied amount of a specific aluminum silicate is 0.01 g/m² or more, the metal ion adsorption effect becomes adequate and increase in the concentration of an unwanted metal ion can be effectively suppressed. Meanwhile, when the same is 50 g/m² or less, excessive content of a specific aluminum silicate, which is an insulator, can be avoided, so that increase in the electrical resistance of a lithium ion secondary battery can be avoided.

The content of a specific aluminum silicate in a cathode mix is preferably from 0.01 mass% to 20 mass%, and more preferably from 0.05 mass% to 15 mass%. When the content is 20 mass% or less, a balance between the content of a specific aluminum silicate as an insulator and the electrical resistance of a lithium ion secondary battery can be maintained favorably.

The content of the cathode material in a cathode mix is preferably from 80 mass% to 99 mass%, and more preferably from 85 mass% to 97 mass%. When the content of the cathode material is 80 mass% or more, adequate energy density can be obtained. Meanwhile, when the same is 98 mass% or less, by selecting an optimal binder component, adequate adherence can be obtained.

The content of the binder in a cathode mix is preferably from 0.5 mass% to 15 mass%, and more preferably from 1 mass% to 10 mass%. When the content of the binder is 0.5 mass% or more, the adhesiveness becomes superior, and a cathode material, *etc.* can be effectively bonded to a cathode current collector. Meanwhile, when the same is 15 mass% or less, decrease in charge-discharge efficiency can be suppressed.

The content of the conductive additive in a cathode mix is preferably 15 mass% or less, and more preferably from 0.5 mass% to 10 mass%. Although the conductive additive is not always an essential component depending on an ordinary discharge current and a type of a used cathode active material, the electric charge transfer resistance of an electrode can be decreased by adding the conductive additive. Meanwhile, when the content is 15 mass% or less, decrease in energy density can be suppressed.

There is no particular restriction on a preparation method of a cathode mix. Examples of a preparation method of a cathode mix containing a specific aluminum silicate include a method, by which a cathode material containing a specific aluminum silicate, and a binder, if necessary, as well as a conductive additive are mixed, and a method, by which a cathode material and a binder, if necessary as well as a conductive additive are immersed in a dispersion liquid of an aluminum silicate, and then dried.

### (3) Cathode Mix Slurry

A cathode mix slurry can be prepared by adding the cathode mix to a solvent. A cathode mix slurry may be also prepared by adding the cathode material and a binder, if necessary, as well as a conductive additive or a thickener to a solvent.

Examples of the solvent include an alcohol solvent, a glycol solvent, a cellosolve solvent, an amino alcohol solvent, an amine solvent, a ketone solvent, a carboxylic acid amide solvent, a phosphoric acid amide solvent, a sulfoxide solvent, a carboxylic acid ester solvent, a phosphoric acid ester solvent, an ether solvent, a nitrile solvent, and water. For the sake of binder solubility, or stable dispersion of a conductive aid, use of a high polarity solvent is preferable.

Specific examples of the solvent include, but not limited to, an amide solvent, in which nitrogen is dialkylated, such as *N,N*-dimethylformamide, *N,N-*diethylformamide, *N_{;}N*-dimethylacetamide, and *N,N*-diethylacetamide, *N*-methylpyrrolidone, hexamethylphosphoric triamide, and dimethyl sulfoxide. The solvents may be used in a combination of 2 or more kinds.

A thickener may be added to a cathode mix slurry for adjusting the viscosity. Examples of a thickener to be use include carboxymethyl cellulose, methyl cellulose, hydroxymethyl cellulose, ethyl cellulose, polyvinyl alcohol, poly(acrylic acid) (salt), oxidized starch, phosphated starch, and casein.

The viscosity of a cathode mix slurry is preferably adjusted appropriately according to a coating method of the cathode mix slurry. The same is in general preferably from 100 mPa·s to 30,000 mPa·s. The viscosity of a cathode mix slurry is measured using a cone-plate rotational viscometer at a temperature of 25°C, and a rotating speed of 10 rpm.

Further, the total solid content in a cathode mix slurry is preferably controlled according to the viscosity.

As a method of preparing a cathode mix slurry a generally used method may be applied. Examples of a method of preparing a cathode mix slurry include, but not limited to, preparation methods using a mixer, such as a disperser, a homo-mixer, and a planetary mixer, a media type disperser, a wet jet mill, a medialess disperser, and a roll mill. As a disperser, use of a disperser provided with a means for preventing contamination of a metal from the disperser is preferable.

### (4) Cathode for Lithium Ion Secondary Battery

Examples of an embodiment of a cathode for a lithium ion secondary battery include an embodiment provided with a layer containing a cathode material on at least one surface of a current collector (hereinafter occasionally referred to as "cathode layer").

A cathode for a lithium ion secondary battery can be formed using a cathode material containing a specific aluminum silicate. With a cathode using a cathode material containing a specific aluminum silicate, an impurity ion ionized at a cathode is scavenged by a specific aluminum silicate, and therefore metal deposit by reduction of a metal ion at an anode can be suppressed. As the result, a short circuit of a battery can be suppressed. Further, since dissolving out of a metal ion from a cathode is suppressed, electrical conductivity among cathode active materials can be maintained and deterioration of battery performance is suppressed.

Insofar as a specific aluminum silicate is contained in a cathode material, from a viewpoint of effective scavenging of an impurity ion or a dissolved ion by a specific aluminum silicate, there is no particular restriction on other constitution.

### 1) Current Collector

As a current collector for a cathode for a lithium ion secondary battery, an ordinary current collector used for a cathode for a lithium ion secondary battery may be applied, and examples thereof include a metal or an alloy, such as aluminum, titanium, and stainless steel, formed to a tape, such as a foil-form, a perforated foil form, and a mesh form, may be used.

### 2) Cathode Layer

A cathode layer is provided on the current collector and contains a cathode material. Examples of a method for forming a cathode layer on a current collector include a method, by which the cathode mix slurry is applied on to a current collector and dried. Alternatively, a cathode mix slurry in a paste form may be formed into a form, such as a sheet form and a pellet form, and integrated with a current collector.

There is no particular restriction on an application method, and a publicly known method can be used. Specific examples include a die coating method, a dip coating method, a roll coating method, a doctor coating method, a spray coating method, a gravure coating method, a screen printing method, an electrostatic coating method. Further after application, a spreading treatment by a flat plate press, a calender roll, *etc.* may be conducted. Meanwhile, integration of a cathode mix slurry formed into a form such as a sheet form and pellet form may be performed by a publicly known method such as rolling and pressing, or a combination thereof.

The thickness of a cathode layer is in general from 1 µm to 500 µm, and preferably from 10 µm to 300 µm.

### 3) Other layer

A cathode for a lithium ion secondary battery may be provided with another layer. For example, a base layer may be provided between a current collector and a cathode layer for improving bonding between the current collector and the cathode layer. The base layer preferably contains a polymer that does not dissolve nor swell in a solvent of an electrolyte solution, and may contain an electrically conductive substance for reducing the electrical resistance of an electrode to secure electrical conductivity.

### [Anode]

An example of an embodiment of an anode for a lithium ion secondary battery is provided with a layer containing an anode active material (hereinafter occasionally referred to simply as "anode layer") on at least one of surfaces of a current collector.

An anode for a lithium ion secondary battery may contain a specific aluminum silicate. When an anode for a lithium ion secondary battery contains a specific aluminum silicate, a specific aluminum silicate scavenges an impurity ion, so that reduction of a metal ion and deposit of a metal at an anode can be suppressed. As the result, a short circuit of a battery is suppressed. Especially, when a specific aluminum silicate is applied to a surface of an anode, an impurity ion ionized on an anode surface is scavenged before the same is reduced, therefore deposit of a metal at an anode by reduction of an impurity ion can be effectively suppressed.

In viewing that an unwanted metal ion is scavenged by a specific aluminum silicate, insofar as a specific aluminum silicate is contained in an anode, there is no particular restriction on other constitution. There can be an anode provided with a layer containing a specific aluminum silicate on a surface of the anode layer.

### (1) Current Collector

As a current collector of the anode for a lithium ion secondary battery, an ordinary current collector used for an anode for a lithium ion secondary battery may be applied, and examples thereof include a metal or an alloy, such as aluminum, copper, nickel, titanium, and stainless steel, formed to a tape, such as a foil-form, a perforated foil form, and a mesh form, may be used. Further, a porous material may be also used. Examples of a porous material include a porous metal (metal foam), and carbon paper.

### (2) Anode Layer

An anode layer is formed on the current collector and contains an anode active material.

As an anode active material, an ordinary material used for an anode for a lithium ion secondary battery may be applied. Examples of an anode active material include a carbon material, a metallic compound, a metal oxide, a metal sulfide, and an electrically conductive polymer material, which can be doped or intercalated with a lithium ion. As an anode active material, natural graphite, artificial graphite, silicon, lithium titanate, *etc.* may be used singly or in a combination thereof.

The anode layer may contain a binder. Although there is no particular restriction on the binder, examples thereof include, but not limited to, a styrene-butadiene copolymer; a (meth)acrylic copolymer obtained by copolymerizing an ethylenic unsaturated carboxylic acid ester, such as methyl (meth)acrylate, ethyl (meth)acrylate, butyl (meth)acrylate, (meth)acrylonitrile, and hydroxyethyl (meth)acrylate, and an ethylenic unsaturated carboxylic acid, such as acrylic acid, methacrylic acid, itaconic acid, fumaric acid, and maleic acid; and a polymer, such as polyvinylidene fluoride, polyethylene oxide, polyepichlorohydrin, polyphosphazene, polyacrylonitrile, polyimide, and polyamide imide.

Examples of a method of forming an anode layer on a current collector include a method, by which the anode active material and the binder are mixed together with a solvent by a dispersing apparatus, such as a stirrer, a ball mill, a super sand mill, and a high pressure kneader, to prepare an anode mix slurry, and the slurry is applied on to the current collector and dried. Alternatively, an anode mix slurry in a paste form may be formed into a form such as a sheet form and pellet form, and integrated with a current collector.

The content of a binder in an anode layer of the anode is preferably from 0.5 part by mass to 20 parts by mass with reference to the total of an anode active material and a binder as 100 parts by mass, and more preferably from 1 part by mass to 10 parts by mass.

When the content of the binder is 0.5 part by mass or more, adhesion is favorable so that break of an anode due to expansion or contraction during charging and discharging can be suppressed. Meanwhile, when the content is 20 parts by mass or less, increase of electrode resistance can be suppressed.

If necessary, a conductive additive may be added to the anode mix slurry. Examples of a conductive additive include carbon black, graphite, acetylene black, an oxide exhibiting electrical conductivity, and a nitride exhibiting electrical conductivity. The usage of a conductive additive should be approx. from 0.1 mass% to 20 mass% with reference to an anode active material.

Further, a thickener may be added to an anode mix slurry for adjusting the viscosity. As a thickener, carboxymethyl cellulose, methyl cellulose, hydroxymethyl cellulose, ethyl cellulose, polyvinyl alcohol, poly(acrylic acid) (salt), oxidized starch, phosphated starch, casein, *etc.* may be used

There is no particular restriction on a method of applying the anode mix slurry to a current collector. Examples of the application method include such publicly known methods as a metal mask printing method, an electrostatic coating method, a dip coating method, a spray coating method, a roll coating method, a doctor blade method, a gravure coating method, and a screen printing method. If necessary, after application, a spreading treatment should preferably be conducted by a flat plate press, a calender roll, *etc.*

Further, an anode mix slurry formed into a form such as a sheet form and pellet form may be integrated with a current collector by a publicly known method, such as rolling, pressing, and a combination thereof.

The thickness of an anode layer is in general from 1 µm to 500 µm, and preferably from 10 µm to 300 µm.

An anode layer formed on the current collector and an anode layer having been integrated with a current collector is preferably heat-treated according to a used binder. For example, where a binder with polyacrylonitrile as a main skeleton is used, a heat treatment between 100°C and 180°C is preferable, and where a binder with polyimide, or polyamide imide as a main skeleton is used, a treatment between 150°C and 450°C is preferable.

By the heat treatment, adhesion between particles and between a particle and a current collector can be improved owing to advancement of strength increase by solvent removal or binder curing. In this connection, the heat treatment is performed preferably in an inert atmosphere, such as helium, argon, and nitrogen, or in a vacuum atmosphere to prevent a treated current collector from oxidizing.

Further, pressing (pressure treatment) is preferably conducted on an anode after the heat treatment. The electrode density can be adjusted by a pressure treatment. For example, the electrode density of an anode for a lithium ion secondary battery using natural graphite as an anode material is preferably from 1.0 g/cm³ to 2.0 g/cm³. The higher the electrode density is, the higher the volumetric capacity is enhanced.

### (3) Layer Containing Specific Aluminum Silicate

A layer containing a specific aluminum silicate is formed on the anode layer. The layer containing a specific aluminum silicate may be formed by any method. Among others, the layer is preferably formed by a dispersion liquid containing a specific aluminum silicate from a viewpoint that a specific aluminum silicate can be distributed uniformly on an anode, and as the result an unwanted metal ion can be adsorbed effectively.

The dispersion liquid can be prepared, for example, by mixing a specific aluminum silicate with a binder and a solvent by a dispersing apparatus, such as a stirrer, a ball mill, a super sand mill, and a high pressure kneader. A layer containing a specific aluminum silicate can be formed by applying the dispersion liquid on the anode layer.

There is no particular restriction on a method of applying the dispersion liquid on to an anode layer. Examples include such publicly known methods as a metal mask printing method, an electrostatic coating method, a dip coating method, a spray coating method, a roll coating method, a doctor blade method, a gravure coating method, and a screen printing method. If necessary, after application, a spreading treatment should preferably be conducted by a flat plate press, a calender roll, *etc.*

Examples of a solvent for the dispersion liquid include water, an amide compound such as 1-methyl-2-pyrrolidone, an alcohol solvent such as methanol, ethanol, 1-propanol, 2-propanol, 1-butanol, 2-butanol, 2-methyl-1-propanol, and 2-methyl-2-propanol, and from a viewpoint of mitigation of an environmental load water is more preferable.

The content of a specific aluminum silicate in the dispersion liquid is preferably from 0.01 mass% to 50 mass%, more preferably from 0.1 mass% to 30 mass%, and further preferably from 1 mass% to 20 mass%.

The applied amount of a specific aluminum silicate to an anode for a lithium ion secondary battery is preferably approx. from 0.01 g/m² to 50 g/m², more preferably from 0.05 g/m² to 30 g/m², and further preferably from 0.1 g/m² to 20 g/m².

The dispersion liquid preferably contains further a binder. In this case in which a dispersion liquid of a specific aluminum silicate is added to a binder, the specific aluminum silicate is fixed on an anode. Consequently, in producing a battery, coming off of a specific aluminum silicate powder is prevented, and because of presence of the same on an anode during charging and discharging an unwanted metal ion can be adsorbed efficiently.

As a binder to be contained in the dispersion liquid, the binders described for the anode layer may be applied.

A thickener may be added to a dispersion liquid for adjusting the viscosity. As a thickener carboxymethyl cellulose, methyl cellulose, hydroxymethyl cellulose, ethyl cellulose, polyvinyl alcohol, poly(acrylic acid) (salt), oxidized starch, phosphated starch, casein, *etc.* may be used.

If necessary, a conductive additive may be added to the dispersion liquid. Examples of a conductive additive include carbon black, graphite, acetylene black, an oxide exhibiting electrical conductivity, and a nitride exhibiting electrical conductivity. The usage of a conductive additive should be approx. from 0.1 mass% to 20 mass% with reference to an anode active material.

### (4) Other layer

An anode for a lithium ion secondary battery may be provided with another layer. For example, a base layer may be provided between a current collector and an anode layer for improving bonding between the current collector and the anode layer. The base layer preferably contains a polymer that does not dissolve nor swell in a solvent of an electrolyte solution, and may contain an electrically conductive substance for reducing the electrical resistance of an electrode to secure electrical conductivity.

### [Electrolyte Solution]

There is no particular restriction on an electrolyte solution to be used for a lithium ion secondary battery, and a publicly known electrolyte solution may be used. For example, using an electrolyte solution, in which an electrolyte is dissolved in an organic solvent, a nonaqueous lithium ion secondary battery can be obtained.

Examples of the electrolyte include a lithium salt, such as LiPF₆, LiClO₄, LiBF₄, LiClF₄, LiAsF₆, LiSbF₆, LiAlO₄, LiAlCl4, LiN(CF₃SO₂)₂, LiN(C₂F₅SO₂)₂, LiC(CF₃SO₂)₃, LiCl, and LiI.

Further, there is no particular restriction on the concentration of the electrolyte. For example, an electrolyte is preferably from 0.3 mol to 5 mol with reference to 1 L of an electrolyte solution, more preferably from 0.5 mol to 3 mol, and especially preferably from 0.8 mol to 1.5 mol.

Examples of the organic solvent include an aprotic solvent, such as a carbonate solvent (propylene carbonate, ethylene carbonate, diethyl carbonate, dimethyl carbonate, butylene carbonate, vinylene carbonate, fluoroethylene carbonate, ethyl methyl carbonate, methyl propyl carbonate, butyl methyl carbonate, ethyl propyl carbonate, butyl ethyl carbonate, dipropyl carbonate, *etc*.)*,* a lactone solvent (γ-butyrolactone, *etc*.), an ester solvent (methyl acetate, ethyl acetate, *etc*.)*,* an open-chain ether solvent (1,2-dimethoxyethane, dimethyl ether, diethyl ether, *etc*.), a cyclic ether solvent (tetrahydrofuran, 2-methyl tetrahydrofuran, dioxolane, 4-methyl dioxolane, *etc*.), a ketone solvent (cyclopentanone, *etc*.), a sulfolane solvent (sulfolane, 3-methyl sulfolane, 2,4-dimethyl sulfolane, *etc*.), a sulfoxide solvent (dimethyl sulfoxide, *etc*.), a nitrile solvent (acetonitrile, propionitrile, benzonitrile, *etc*.), an amide solvent (*N,N*-dimethylformamide, *N,N-*dimethylacetamide, *etc*.), a urethane solvent (3-methyl-1,3-oxazolidin-2-one, *etc*.), and a polyoxyalkylene glycol solvent (diethylene glycol, *etc*.). The organic solvents may be used singly or as a mixed solvent of 2 or more kinds thereof.

An electrolyte solution may contain a specific aluminum silicate.

Examples of a method of adding a specific aluminum silicate to the electrolyte solution include a method, by which the specific aluminum silicate is added in a solid state or a dispersion liquid state to an electrolyte solution and mixed. Especially, a method of addition in a solid state is preferable.

There is no particular restriction on a solvent of the dispersion liquid. It is preferably the same as an organic solvent composing an electrolyte solution.

Further, the concentration of a specific aluminum silicate in a dispersion liquid state may be selected appropriately according to need. For example, it is preferably from 0.01 mass% to 50 mass%, and more preferably from 1 mass% to 20 mass%.

The content of the specific aluminum silicate in the electrolyte solution is preferably from 0.01 mass% to 50 mass% in the electrolyte solution from a viewpoint of suppression of occurrence of a short circuit, more preferably from 0.1 mass% to 30 mass%, and further preferably from 0.5 mass% to 10 mass%.

### [Separator]

A lithium ion secondary battery may have a separator. A separator includes a separator substrate. In this connection, in the case of a structure in which a cathode and an anode of a lithium ion secondary battery do not touch directly, it is not necessary to use a separator.

### (1) Separator Substrate

There is no particular restriction on a separator substrate constituting a separator, insofar as it is a porous substrate, and any one appropriately selected out of ordinarily used separator substrates may be used. There is no particular restriction on the porous substrate, insofar as it has inside a porous structure with a large number of empty pores or voids, which are communicated each other. Examples of a porous substrate include a microporous membrane, a nonwoven fabric, a paper-like sheet, and other sheets having a three-dimensional network structure. Among them, a microporous membrane is preferable from a viewpoint of handling property or strength. Although either of an organic material and an inorganic material may be used as a material constituting a porous substrate, a thermoplastic resin such as a polyolefin resin is preferable from a viewpoint of availability of shutdown performance. Namely, when such a polyolefin porous substrate is applied, both heat resistance and shutdown function can be secured.

Examples of the polyolefin resin include polyethylene, polypropylene, and polymethylpentene. Among others, from a viewpoint of availability of superior shutdown characteristics, a resin containing 90 mass% or more of polyethylene is preferable. Polyethylene may be any of low density polyethylene, high density polyethylene and ultra-high molecular weight polyethylene. Especially, polyethylene containing at least one type selected out of high density polyethylene and ultra-high molecular weight polyethylene is preferable, and polyethylene composed of a mixture of high density polyethylene and ultra-high molecular weight polyethylene is more preferable. Such polyethylene is superior in strength and formability.

A weight-average molecular weight from 100,000 to 10000,000 is appropriate as the molecular weight of polyethylene, and especially a polyethylene composition containing at least 1 mass% or more of ultra-high molecular weight polyethylene with the weight-average molecular weight 1,000,000 or more is preferable.

Alternatively, a porous substrate according to the invention may be composed by mixing another polyolefin, such as polypropylene, and polymethylpentene in addition to polyethylene, or may be constituted as a 2 or more layer laminate with a polyethylene microporous membrane and a polypropylene microporous membrane.

There is no particular restriction on the film thickness of the porous substrate. It is, for example, in a range of from5 µm to 50 µm, and more preferably from 7 µm to 30 µm. When the film thickness is 5 µm or more, adequate strength can be obtained and favorable handling property can be obtained, so that the yield rate of batteries is improved. Meanwhile, when the film thickness is 50 µm or less, the ion mobility is satisfactory, and, since the volume occupied by a separator in a battery is suppressed, the energy density of a battery is improved.

There is no particular restriction on the porosity of a porous substrate. It is preferably, for example, from 10% to 60%, and more preferably from 20% to 50%. When the porosity is 10% or more, an electrolyte solution in an amount adequate for operation of a battery can be retained and satisfactory charge and discharge performance can be obtained. Further, when the porosity is 60% or less, satisfactory shutdown performance can be obtained, and moreover adequate strength can be also obtained. As the porosity of a porous body, a value obtained by a mercury intrusion method by POREMASTER 60GT (manufactured by Quantachrome Instruments) is used.

The piercing strength of a separator expressed as a value reduced to a thickness of 20 µm is preferably in a range of from 0.020 N/cm² to 0.061 N/cm². When the piercing strength is 0.020 N/cm² or more, strength sufficient to suppress occurrence of a short circuit can be obtained. Further, when the same is 0.061 N/cm² or less or less, decrease in the ion conductivity can be suppressed. The piercing strength of a porous body is a value obtained by a precision universal tester AGS-X manufactured by Shimadzu Corporation.

The Gurley value (JIS P8117) of a porous substrate in a range of from 100 sec/100mL to 500 sec/100mL is appropriate, and more appropriate in a range of from 100 sec/100mL to 300 sec/100mL. When the Gurley value is 100 sec/100mL or more, favorable shutdown performance or mechanical strength can be obtained. When the Gurley value is 500 sec/100mL or less, favorable ion permeability can be obtained and load characteristics of a battery are improved.

The average pore diameter of a porous substrate is preferably from 10 nm to 100 nm. When the average pore diameter is 10 nm or more, the impregnation property of an electrolyte solution becomes favorable. Further, when the average pore diameter is 100 nm or less, favorable shutdown performance can be obtained.

### (2) Specific Aluminum Silicate in Separator

A separator for a lithium ion secondary battery may include a specific aluminum silicate in addition to a separator substrate. When a separator includes a specific aluminum silicate, an unwanted metal ion, such as an impurity ion in a lithium ion secondary battery and a metal ion having dissolved out from a cathode, *etc.,* is adsorbed by a specific aluminum silicate. From this, concentration increase of an unwanted metal ion can be selectively suppressed. A lithium ion secondary battery having such a separator, in which occurrence of a short circuit caused by an unwanted metal ion can be suppressed, is superior in lifetime characteristics. Further, since a separator includes a specific aluminum silicate, an unwanted metal ion, which moves bidirectionally toward a cathode and an anode passing through a separator during charging and discharging of a lithium ion secondary battery, can be adsorbed more efficiently by a separator.

Examples of a method of applying a specific aluminum silicate to a separator include a method, by which a separator substrate is immersed in a dispersion liquid of a specific aluminum silicate, and a method, by which the dispersion liquid of a specific aluminum silicate is coated on a separator substrate. Further, a separator substrate after impregnation or coating of the dispersion liquid may be, if necessary, dried. According to the above, a separator provided with a layer containing a specific aluminum silicate on a surface of a separator substrate can be obtained.

When a layer containing a specific aluminum silicate is to be formed on a surface of a separator substrate, the same may be formed on a single surface or both surfaces of a separator substrate. When a layer is formed only on a single surface of a separator substrate, it may be on a surface of either on the cathode side or the anode side. In view of that a metal ion dissolves out of a cathode, or a metal ion is reduced and a metal deposits at an anode, a layer is preferably formed at least on a surface on the cathode side, and more preferably on both surfaces.

There is no particular restriction on a solvent of the dispersion liquid containing a specific aluminum silicate. Examples of a solvent of the dispersion liquid include water, an amide solvent such as 1-methyl-2-pyrrolidone, and an alcohol solvent, such as methanol, ethanol, 1-propanol, 2-propanol, 1-butanol, 2-butanol, 2-methyl-1-propanol, and 2-methyl-2-propanol.

The concentration of a specific aluminum silicate in a dispersion liquid may be selected appropriately according to need. It may be, for example, from 0.01 mass% to 50 mass%, and preferably from 1 mass% to 20 mass%.

The dispersion liquid preferably contains further a binder. When the dispersion liquid of a specific aluminum silicate contains a binder, a specific aluminum silicate can be fixed on a separator. Consequently, in producing a battery, coming off of a specific aluminum silicate powder is prevented, and because of presence of the same on a separator surface during charging and discharging an unwanted metal ion can be adsorbed efficiently.

Although there is no particular restriction on a binder to be contained in the dispersion liquid, it is preferably a binder same as those used in a cathode material layer or an anode material layer from a viewpoint that it is a constituent of a battery. Examples of a binder include, but not limited to, a styrene-butadiene copolymer; a (meth)acrylic copolymer obtained by copolymerizing an ethylenic unsaturated carboxylic acid ester, such as methyl (meth)acrylate, ethyl (meth)acrylate, butyl (meth)acrylate, (meth)acrylonitrile, and hydroxyethyl (meth)acrylate, and an ethylenic unsaturated carboxylic acid, such as acrylic acid, methacrylic acid, itaconic acid, fumaric acid, and maleic acid; and a polymer, such as polyvinylidene fluoride, polyethylene oxide, polyepichlorohydrin, polyphosphazene, polyacrylonitrile, polyimide, and polyamide imide.

The content of a binder in a layer containing a specific aluminum silicate is preferably from 0.1 part by mass to 15 parts by mass with reference to the total of a specific aluminum silicate and a binder as 100 parts by mass, and more preferably from 0.3 part by mass to 10 parts by mass.

When the content of a binder is 0.1 part by mass or more, a specific aluminum silicate is fixed effectively on a cathode, and an effect of an applied specific aluminum silicate can be obtained persistently. Meanwhile, when the content is 15 parts by mass or less, the efficiency of metal adsorption per mass can be improved.

The content of a specific aluminum silicate in the separator is preferably from 0.01 g/m² to 50 g/m² from a viewpoint of suppression of occurrence of a short circuit, and more preferably from 0.1 g/m² to 20 g/m².

Although there is no particular restriction on a method of coating the dispersion liquid to a separator substrate, examples thereof include such publicly known methods as a metal mask printing method, an electrostatic coating method, a dip coating method, a spray coating method, a roll coating method, a doctor blade method, a gravure coating method, and a screen printing method.

Examples of another method of obtaining a separator containing a specific aluminum silicate include a method, by which a specific aluminum silicate is added in a solid state or in a dispersion liquid state to a resin composition composing a separator substrate, and a separator is formed with the obtained resin composition substrate containing a specific aluminum silicate. By this method, a separator constituted with a separator substrate containing a specific aluminum silicate can be obtained.

The content of a specific aluminum silicate in a separator constituted with a separator substrate containing a specific aluminum silicate is preferably from 0.01 g/m² to 50 g/m² from viewpoints of suppression of occurrence of a short circuit and suppression of the internal resistance, and more preferably from 0.1 g/m² to 20 g/m².

A specific method of forming a separator substrate using a resin composition containing a specific aluminum silicate may be referred to, for example, Paragraphs [0063] to [0122] in JP-ANo. 2008-146963.

The separator for a lithium ion secondary battery can be used without particular restriction by an ordinary method, insofar as the same is placed between the two electrodes of a cathode and an anode.

### [Binder]

A binder contained in a constituent of a lithium ion secondary battery may also contain a binder compound and a specific aluminum silicate.

When a binder contains a specific aluminum silicate, examples of a constituent of a lithium ion secondary battery, to which a binder can be applied, include an anode, a cathode, a separator, and an outer package. By applying a binder in a state containing a specific aluminum silicate to a constituent of a lithium ion secondary battery, coming off of a specific aluminum silicate from the constituent during production of a battery can be suppressed, and the specific aluminum silicate can be retained also during charging and discharging. Further by using a binder as a binding agent of an anode active material or a cathode active material, a specific aluminum silicate can be efficiently distributed over the respective active material surfaces.

### (1) Binder Compound

As a binder compound, ordinary polymers used for a lithium ion secondary battery may be applied.

Examples thereof include, but not limited to, a styrene-butadiene copolymer; a (meth)acrylic copolymer obtained by copolymerizing an ethylenic unsaturated carboxylic acid ester, such as methyl (meth)acrylate, ethyl (meth)acrylate, butyl (meth)acrylate, (meth)acrylonitrile, and hydroxyethyl (meth)acrylate, and an ethylenic unsaturated carboxylic acid, such as acrylic acid, methacrylic acid, itaconic acid, fumaric acid, and maleic acid; and a polymer, such as polyvinylidene fluoride, polyethylene oxide, polyepichlorohydrin, polyphosphazene, polyacrylonitrile, polyimide, and polyamide imide.

### (2) Specific Aluminum Silicate in Binder

The content of a specific aluminum silicate in a binder for a lithium ion secondary battery should preferably be adjusted appropriately according to a constituent to be applied to. For example, in the case, in which a layer containing an active material of a cathode or an anode is applied to, the content is preferably adjusted between 0.01 g/m² and 50 g/m², more preferably between 0.05 g/m² and 30 g/m², and further preferably between 0.1 g/m² and 20 g/m². In the case, in which a surface of a cathode or an anode is applied to, the content is preferably adjusted between 0.01 g/m² and 50 g/m², more preferably between 0.05 g/m² and 30 g/m², and further preferably between 0.1 g/m² and 20 g/m². In the case, in which a surface of a separator is applied to, the content is preferably adjusted between 0.01 g/m² and 50 g/m², more preferably between 0.05 g/m² to 30 g/m², and further preferably between 0.1 g/m² and 20 g/m². In the case, in which an inside of an outer package is applied to, the content is preferably adjusted between 0.01 g/m² and 50 g/m², more preferably between 0.05 g/m² and 30 g/m², and further preferably between 0.1 g/m² and 20 g/m².

When the content of a specific aluminum silicate is within the above range, a metal ion adsorption effect becomes adequate, and the content of a specific aluminum silicate as an insulator is prevented from becoming excessive, and the electrical resistance of a lithium ion secondary battery is prevented from growing too high.

There is no particular restriction on a form of a specific aluminum silicate when the same is added to a binder compound, and may be in a form of powder, aqueous dispersion, organic solvent dispersion, gel, or the like.

There is no particular restriction on a method of adding a specific aluminum silicate to the binder compound, and examples thereof include (1) a method of adding the polymer to a dispersion liquid or a gel of aluminum silicate, (2) a method of conducting drying after the addition according to (1) above, and (3) a method of simply mixing the polymer and a specific aluminum silicate in a solid state.

Although the binder may be in a form of a dispersion liquid or a gel form, which are formed by adding an organic polymer to a dispersion liquid or a gel of aluminum silicate, a dry form after removal of a solvent is appropriate for the reason of transportation cost, stability of properties, or the like. In coating the binder on a constituent of a lithium ion secondary battery, a dried product is preferably dispersed in an appropriate solvent to form a slurry and used. By forming a slurry, a binder can be added or coated to a constituent more uniformly.

### (3) Conductive Additive

Further, a conductive additive may be added to the binder. Examples of the conductive additive include carbon black, such as Ketjen black, acetylene black, channel black, furnace black, lamp black, and thermal black; graphite, such as natural graphite like squamous graphite, artificial graphite, and expanded graphite; a conductive fiber, such as a carbon fiber, and a metal fiber; metal powders of copper, silver, nickel, aluminum, *etc*.; and an organic electrically conductive material, such as a polyphenylene derivative. The conductive additives may be used singly, or as a mixture of plural kinds thereof.

### <Slurry>

The binder may be added to a solvent to form a slurry. A slurry may be also prepared by adding in a solvent a specific aluminum silicate, and the polymer, if necessary, as well as the conductive additive, a thickener, or a combination thereof.

Examples of the solvent include an alcohol solvent, a glycol solvent, a cellosolve solvent, an amino alcohol solvent, an amine solvent, a ketone solvent, a carboxylic acid amide solvent, a phosphoric acid amide solvent, a sulfoxide solvent, a carboxylic acid ester solvent, a phosphoric acid ester solvent, an ether solvent, a nitrile solvent, and water. For the sake of solubility of a binder compound, or stable dispersion of a conductive aid, use of a high polarity solvent is preferable.

Specific examples of the solvent include, but not limited to, an amide solvent, in which nitrogen is dialkylated, such as *N,N-*dimethylformamide, *N,N-*diethylformamide, *N,N*-dimethylacetamide, and *N,N*-diethylacetamide, *N*-methylpyrrolidone, hexamethylphosphoric triamide, and dimethyl sulfoxide. The solvents may be used in a combination of 2 or more kinds.

Examples of the thickener to be use include carboxymethyl cellulose, methyl cellulose, hydroxymethyl cellulose, ethyl cellulose, polyvinyl alcohol, poly(acrylic acid) (salt), oxidized starch, phosphated starch, and casein.

The viscosity of a slurry is preferably adjusted appropriately according to a method of coating the slurry. The same is in general preferably from 100 mPa·s to 30,000 mPa·s. The viscosity of the slurry is measured using a cone-plate rotational viscometer at a temperature of 25°C, and a rotating speed of 10 rpm.

Further, the total solid content in the slurry is preferably controlled according to the viscosity.

As a method of preparing the slurry a generally used method may be applied. Examples of a method of preparing the slurry include, but not limited to, methods using a mixer, such as a disperser, a homo-mixer, and a planetary mixer, a media type disperser, a wet jet mill, a medialess disperser, and a roll mill. As a disperser, use of a disperser provided with a means for preventing contamination of a metal from the disperser is preferable.

When a binder containing a specific aluminum silicate is applied to a cathode, the binder may be contained in a cathode layer or a surface layer on the cathode layer. When a specific aluminum silicate is contained in a cathode layer, the applied amount of the specific aluminum silicate is preferably from 0.01 g/m² to 50 g/m², more preferably from 0.05 g/m² to 30 g/m², and further preferably from 0.1 g/m² to 20 g/m². When the applied amount of a specific aluminum silicate is 0.01 g/m² or more, an unwanted metal ion can be adsorbed effectively, and when the same is 50 g/m² or less, increase in the electrical resistance of a lithium ion secondary battery can be restricted.

In the case of a cathode having a surface layer on the outer surface of a cathode layer, a binder containing a specific aluminum silicate according to the invention may be contained in the surface layer.

When a specific aluminum silicate is contained in the surface layer, the applied amount of a specific aluminum silicate is preferably approx. from 0.01 g/m² to 50 g/m², more preferably from 0.05 g/m² to 30 g/m², and further preferably from 0.1 g/m² to 20 g/m². When the applied amount of a specific aluminum silicate is 0.01 g/m² or more, an unwanted metal ion can be adsorbed effectively, and when the same is 50 g/m² or less, increase in the electrical resistance of a lithium ion secondary battery can be restricted.

When a binder containing a specific aluminum silicate is applied to an anode, the binder may be contained in an anode layer or a surface layer on the anode layer. When a specific aluminum silicate is contained in an anode layer, the applied amount of the specific aluminum silicate is preferably from 0.01 g/m² to 50 g/m², more preferably from 0.05 g/m² to 30 g/m², and further preferably from 0.1 g/m² to 20 g/m². When the applied amount of a specific aluminum silicate is 0.01 g/m² or more, an unwanted metal ion can be adsorbed effectively, and when the same is 50 g/m² or less, increase in the electrical resistance of a lithium ion secondary battery can be restricted.

In the case of an anode having a surface layer on the outer surface of an anode layer, a binder containing a specific aluminum silicate may be contained in the surface layer.

When a specific aluminum silicate is contained in the surface layer, the applied amount of a specific aluminum silicate is preferably from 0.01 g/m² to 50 g/m², more preferably from 0.05 g/m² to 30 g/m², and further preferably from 0.1 g/m² to 20 g/m². When the applied amount of a specific aluminum silicate is 0.01 g/m² or more, an unwanted metal ion can be adsorbed effectively, and when the same is 50 g/m² or less, increase in the electrical resistance of a lithium ion secondary battery can be restricted.

When a binder containing a specific aluminum silicate is applied to a separator, the binder containing a specific aluminum silicate may be applied to a surface of a separator. The surface of a separator to which a specific aluminum silicate is applied may be on either on the cathode side or the anode side, and application to a surface on the cathode side is preferable considering that a metal ion dissolves out from a cathode, or the metal ion is reduced and a metal deposits at an anode. Meanwhile, a binder containing a specific aluminum silicate may be applied to a separator on a single surface or on both surfaces.

When a specific aluminum silicate is applied to a surface of the separator, the applied amount of a specific aluminum silicate is preferably from 0.01 g/m² to 50 g/m², more preferably from 0.05 g/m² to 30 g/m², and further preferably from 0.1 g/m² to 20 g/m².

When the applied amount of a specific aluminum silicate is 0.01 g/m² or more, an unwanted metal ion can be adsorbed effectively, and when the same is 50 g/m² or less, increase in the electrical resistance of a lithium ion secondary battery can be restricted.

### [Outer Package]

There is no particular restriction on an outer package of a lithium ion secondary battery, and examples thereof include a metal can, such as iron and aluminum, and a laminate film.

A binder containing a specific aluminum silicate may be applied to an inner surface of an outer package. When a binder containing a specific aluminum silicate is applied to an inner surface of an outer package, there is no particular restriction on the applied amount of a specific aluminum silicate, and the same is preferably from 0.01 g/m² to 50 g/m², and more preferably from 0.05 g/m² to 30 g/m². When the applied amount of a specific aluminum silicate is 0.01 g/m² or more, an unwanted metal ion can be adsorbed effectively, and when the same is 50 g/m² or less, the electrical resistance of a lithium ion secondary battery can be within a preferable range.

### [Structure]

Although there is no particular restriction on a structure of a lithium ion secondary battery, a structure is prevailing, in which a cathode and an anode, as well as a separator provided according to need, are ordinarily wound in a flat spiral-shape to form a spiral-wound pole plate assembly, or stacked in a planar shape to form a layer built pole plate assembly, and the pole plate assembly is encapsulated in an outer package.

A lithium ion secondary battery is used as, but not particularly limited to, a paper battery, a button battery, a coin battery, a layer-built battery, a cylindrical battery, a square-shaped battery, *etc.*

### [Examples]

The invention will be described more specifically below by way of Examples and Comparative Example, provided that the invention be not limited to the following Examples.

### [Production Example 1]

### <Preparation of Specific Aluminum Silicate>

An aqueous solution (500mL) of sodium orthosilicate with a concentration of 350 mmol/L was added to an aqueous solution (500mL) of aluminum chloride with a concentration of 700 mmol/L, and stirred for 30 minutes. To the resultant solution, 330 mL of an aqueous solution of sodium hydroxide with a concentration of 1 mol/L was added to adjust the pH to 6.1.

The solution after adjustment of the pH was stirred for 30 min, and centrifuged by a centrifuge SUPREMA 23 manufactured by Tomy Seiko Co., Ltd. using a standard rotor NA-16 at a rotation speed of 3,000 rpm for 5 min. After the centrifugation, the supernatant solution was discarded, and a gel precipitate was redispersed in pure water to recover the same volume before the centrifugation. The desalting treatment by centrifugation was repeated 3 times.

A gel precipitate obtained after discarding a supernatant at the third desalting treatment was dispersed in pure water so as to attain a concentration of 60 g/L, and the electric conductivity thereof was measured using F-55 (manufactured by Horiba Ltd.) and a conductivity cell 9382-10D at normal temperature (25°C), which was found to be 1.3 S/m.

To the gel precipitate obtained after discarding the supernatant at the third desalting treatment, 135 mL of hydrochloric acid with a concentration of 1 mol/L was added to adjust the pH to 3.5, and stirred for 30 min. The silicon atom concentration and the aluminum atom concentration in the solution were measured with an ICP emission spectroscopic apparatus P-4010 (manufactured by Hitachi, Ltd.) in the usual manner, and it was found that the silicon atom concentration was 213 mmol/L, and the aluminum atom concentration was 426 mmol/L.

Next, the solution was placed in a drier and heated at 98°C for 48 hours (2 days).

To the solution after the heating (aluminum silicate concentration 47 g/L), 188 mL of an aqueous solution of sodium hydroxide with a concentration of 1 mol/L was added to adjust the pH to 9.1. By the pH adjustment, aluminum silicate in the solution was aggregated, and the aggregate was precipitated by centrifugation as above and then the supernatant liquid was discarded. A desalting treatment, in which pure water was added to a precipitate after discarding a supernatant liquid to recover a volume before centrifugation, was repeated 3 times.

A gel precipitate obtained after discarding the supernatant at the third desalting treatment was dispersed in pure water so as to attain a concentration of 60 g/L, and the electric conductivity thereof was measured using F-55 (manufactured by Horiba Ltd.) and a conductivity cell 9382-10D at normal temperature (25°C), which was found to be 0.6 S/m.

The gel precipitate obtained after discarding the supernatant at the third desalting treatment was dried at 60°C for 16 hours , thereby obtaining 30 g of a powder. The powder was designated as sample A.

### <BET Specific Surface Area, Total Pore Volume, and Average Pore Diameter>

The BET specific surface, total pore volume, and average pore diameter of sample A were measured based on nitrogen adsorption capacity. AUTOSORB-1 (trade name; manufactured by Quantachrome Instruments) was used as a measurement apparatus. For the measurement, a sample pretreatment was conducted as described below, and a measurement temperature was set at 77 K and a measurement pressure range was set below 1 in terms of relative pressure (equilibrium pressure to saturation vapor pressure).

As a pretreatment, 0.05g of the sample A was charged in a measurement cell, followed by vacuuming using a vacuum pump and automatic heating. Detailed conditions set for the treatment were: after reducing the pressure to 10 Pa or less, heated and maintained at 110°C for 3 hours, and then allowed to cool down naturally to normal temperature (25°C) while keeping the vacuum state.

As the results of the measurement of the sample A, the BET specific surface area was 363 m²/g, the total pore volume was 0.22 cm³/g, and the average pore diameter was 2.4 nm.

### <²⁷Al-NM R>

A measurement was conducted using an AV400WB Model (manufactured by Bruker BioSpin) as a measurement apparatus for a ²⁷Al-NMR spectrum under the following conditions.
Resonance frequency: 104 MHz
Measuring method: MAS (single pulse)
MAS spinning speed: 10 kHz
Measurement region: 52 kHz
Data point number: 4096
Resolution (measurement region/data point number): 12.7Hz
Pulse width: 3.0 µsec
Delay time: 2 sec
Chemical shift standard: 3.94 ppm of α-alumina
Window function: exponential function
Line broadening coefficient: 10 Hz

Figure 1 shows a ²⁷Al-NMR spectrum of sample A. As shown in Figure 1, there was a peak in the vicinity of 3 ppm. Further, a weak peak was recognized in the vicinity of 55 ppm. The area ratio of the peak near 55 ppm to the peak in the vicinity of 3 ppm was 15%.

### <²⁹Si-NM R>

A measurement was conducted using an AV400WB Model (manufactured by Bruker BioSpin) as a measurement apparatus for a ²⁹Si-NMR spectrum under the following conditions.
Resonance frequency: 79.5 MHz
Measuring method: MAS (single pulse)
MAS spinning speed: 6 kHz
Measurement region: 24 kHz
Data point number: 2048
Resolution (measurement region/data point number): 5.8 Hz
Pulse width: 4.7 µsec
Delay time: 600 sec
Chemical shift standard: 1.52 ppm of TMSP-d₄ (sodium 3-(trimethyl silyl) [2,2,3,3 -2H4]propionate)
Window function: exponential function
Line broadening coefficient: 50 Hz

Figure 2 shows a ²⁹Si-NMR spectrum of sample A. As shown in Figure 2, there were peaks in the vicinities of -78 ppm and -85 ppm. The areas of the peaks in the vicinities of -78 ppm and -85 ppm were measured according to the method described above. As a result, the area of the peak B at -85 ppm with respect to the area of the peak A at -78 ppm as 1.00 was 2.61.

### <Element Molar Ratio Si/Al>

The element molar ratio Si/Al of Si and Al determined in the usual manner by an ICP emission spectroscopic analysis (ICP emission spectroscopic apparatus P-4010, manufactured by Hitachi, Ltd.) was 0.5.

### <Powder X-ray Diffraction>

Powder X-ray diffraction was performed with GEIGERFLEX RAD-2X (trade name; manufactured by Rigaku Corporation) using a CuKa ray as a source X-ray. Figure 3 shows a powder X-ray diffraction spectrum of sample A. Broad peaks were observed in the vicinities of 2θ=26.9° and 40.3°. Further, sharp peaks were observed in the vicinities of 2θ=18.8°, 20.3°, 27.8°, 40.6°, and 53.3°. Meanwhile, there was no broad peak observed in the vicinities of 2θ=20° and 35°.

### <Transmission Electron Micrograph (TEM) Observation>

Figure 4 shows a transmission electron micrograph (TEM) of sample A observed at 100,000x magnification. The TEM observation was conducted using a transmission electron microscope (H-7100FA Model, manufactured by Hitachi High-Technologies Corp.) with an acceleration voltage of 100 V. A TEM observation specimen of sample A was prepared as follows. Namely, a heated solution before the final desalting treatment step (aluminum silicate concentration 47 g/L) was diluted 10-fold with pure water, subjected to an ultra-sonic treatment for 5 min, and then dropped on a substrate for preparing a TEM observation specimen, followed by natural drying, thereby forming a thin film.

### As shown in Figure 4, there is no tubular object having a length of 50 nm or more. <Moisture Content>

After sample A was heated and maintained at 120°C in an atmospheric pressure for 6 hours, the moisture content of sample A was measured by the Karl-Fischer method, which was found to be 3 mass%.

### <Metal Ion Adsorption Capacity in Water 1>

A measurement of metal ion adsorption capacity was conducted by an ICP emission spectroscopic analysis (ICP emission spectroscopic apparatus P-4010 manufactured by Hitachi, Ltd.).

Prior to the measurement metal ion adsorption capacity, metal ion solutions having a concentration of 100 ppm were prepared in advance for each of Li⁺, Ni²⁺ and Mn²⁺ using corresponding metal sulfates and pure water. To each of the prepared solutions, sample A was added to make a final concentration of 1.0 mass%, mixed thoroughly, and left standing. The respective metal ion concentrations before and after the addition of sample A were measured by an ICP emission spectroscopic analysis. The results are shown in Table 1.

With respect to metal ion adsorption capacity, the concentrations of Ni²⁺ and Mn²⁺ after the addition of sample A were less than 5 ppm and 10 ppm, respectively. In contrast, the concentration of Li⁺ after the addition of sample A was 90 ppm, namely there was substantially no adsorption. Thus, sample A adsorbs Ni²⁺ and Mn²⁺, which are unwanted for a lithium ion secondary battery, while hardly adsorbs Li⁺ which is essential for charge and discharge, and therefore can suppress a short circuit without deteriorating the battery performance.

For comparison, the following sample B, sample C and sample D were prepared and the respective metal ion adsorption capacities thereof were evaluated.

A commercial product of active carbon (activated carbon, crushed to 2 mm to 5 mm, produced by Wako Pure Chemical Industries, Ltd.) was designated as sample B. With respect to metal ion adsorption capacity in water, the concentrations of Ni²⁺, Mn²⁺, and Li⁺ after addition of sample B were 50 ppm, 60 ppm, and 100 ppm, respectively. The results are shown in Table 1.

A commercial product of silica gel (fine granule (white), produced by Wako Pure Chemical Industries, Ltd.) was designated as sample C. With respect to metal ion adsorption capacity in water, the concentrations of Ni²⁺, Mn²⁺, and Li⁺ after addition of sample C were 100 ppm, 100 ppm, and 80 ppm, respectively. The results are shown in Table 1.

A commercial product of zeolite 4A (MOLECULAR SIEVES 4A, element molar ratio Si/Al=1.0, produced by Wako Pure Chemical Industries, Ltd.) was designated as sample D. With respect to metal ion adsorption capacity in water, the concentrations of Ni²⁺, Mn²⁺, and Li⁺ after addition of sample D were 30 ppm, 10 ppm, and 60 ppm, respectively.

The Mn²⁺ solution to which zeolite 4A was added turned into brownish color, and cloudy when left standing. The results are shown in Table 1.

**[Table 1]**

| Sample | | Concentration after Addition of Sample [ppm] | | |
|---|---|---|---|---|
| | | Ni²⁺ | Mn²⁺ | Li⁺ |
| Sample A | Aluminum Silicate | <5 | 10 | 90 |
| Sample B | Active Carbon | 50 | 60 | 100 |
| Sample C | Silica Gel | 100 | 100 | 80 |
| Sample D | Zeolite 4A | 30 | 10 | 60 |

### <Metal Ion Adsorption Capacity in Water 2>

Metal ion adsorption capacity in water was evaluated by the same method described in "Metal Ion Adsorption Capacity in Water 1" except that sample A prepared in Production Example 1 was used in the addition amounts as set forth in Table 2. The results are shown in Table 2.

**[Table 2]**

| Addition Amount of Sample A [mass%] | Mn²⁺ Concentration after Addition of Sample A [ppm] |
|---|---|
| 0.0 | 100 |
| 0.5 | 50 |
| 2.0 | 5 |

As shown in Table 2, by addition of 0.5 mass% of sample A, the manganese ion concentration was halved. By addition of 2.0 mass% of sample A, 95% of the manganese ion was scavenged.

### <Metal Ion Adsorption Capacity in Water 3>

Metal ion adsorption capacity in water was evaluated by the same method described in "Metal Ion Adsorption Capacity in Water 1" except that sample A prepared in Production Example 1 was used, in which the metal ion species was changed to Cu²⁺, and the adjusted concentration of the metal ion was changed to 400 ppm. The pH was 5.1. The concentration of Cu²⁺ after addition of sample A became 160 ppm.

### [Production Example 2]

### <Preparation of Specific Aluminum Silicate>

An aqueous solution (500mL) of sodium orthosilicate with a concentration of 74 mmol/L was added to an aqueous solution (500mL) of aluminum chloride with a concentration of 180 mmol/L, and stirred for 30 min. To the resultant solution, 93 mL of an aqueous solution of sodium hydroxide with a concentration of 1 mol/L was added to adjust the pH to 7.0.

The solution after adjustment of the pH was stirred for 30 min, and centrifuged by a centrifuge SUPREMA 23 (manufactured by Tomy Seiko Co., Ltd.) using a standard rotor NA-16 at a rotation speed of 3,000 rpm for 5 min. After the centrifugation, the supernatant solution was discarded and a gel precipitate was redispersed in pure water to recover the same volume before the centrifugation. The desalting treatment by centrifugation was repeated 3 times.

A gel precipitate obtained after discarding the supernatant at the third desalting treatment was adjusted to have a concentration of 60 g/L, and the electric conductivity thereof was measured using F-55 (manufactured by Horiba Ltd.) and a conductivity cell 9382-10D at normal temperature (25°C), which was found to be 1.3 S/m.

To the gel precipitate obtained after discarding the supernatant at the third desalting treatment, pure water was added so as to have a volume of 12 L. To the solution, 60 mL of hydrochloric acid with a concentration of 1 mol/L was added to adjust the pH to 4.0, and stirred for 30 min. The silicon atom concentration and the aluminum atom concentration in the solution were measured with an ICP emission spectroscopic apparatus P-4010 (manufactured by Hitachi, Ltd.), and it was found that the silicon atom concentration was 2 mmol/L, and the aluminum atom concentration was 4 mmol/L.

Next, the solution was placed in a drier and heated at 98°C for 96 hours (4 days).

To the solution after heating (aluminum silicate concentration 0.4 g/L), 60 mL of an aqueous solution of sodium hydroxide with a concentration of 1 mol/L was added to adjust the pH to 9.0. By the pH adjustment, the solution was aggregated, and the aggregate was precipitated by centrifugation similarly as in the first washing step to discard the supernatant liquid. A desalting treatment, in which pure water was added to the precipitate to recover the same volume before centrifugation, was repeated 3 times.

A gel precipitate obtained after discarding the supernatant at the third desalting treatment was adjusted to have a concentration of 60 g/L, and the electric conductivity thereof was measured using F-55 (manufactured by Horiba Ltd.) and a conductivity cell 9382-10D at normal temperature (25°C), which was found to be 0.6 S/m.

The gel precipitate obtained after the desalting treatment was dried at 60°C for 72 hours (3 days), thereby obtaining 4.8 g of a powder. The powder was designated as sample E.

### <²⁷Al-NMR>

Figure 1 shows a ²⁷Al-NMR spectrum of sample E. As shown in Figure 1, there was a peak in the vicinity of 3 ppm. Further, a weak peak was recognized in the vicinity of 55 ppm. The area ratio of the peak in the vicinity of 55 ppm to the peak in the vicinity of 3 ppm was 4%.

### <²⁹Si-NMR>

Figure 2 shows a ²⁹Si-NMR spectrum of sample E. As shown in Figure 2, there were peaks in the vicinities of -78 ppm and -85 ppm. The areas of the peaks in the vicinities of -78 ppm and -85 ppm were measured according to the method described above. As a result, the area of the peak B in the vicinity of -85 ppm with respect to the area of the peak A in the vicinity of -78 ppm as 1.00 was 0.44.

### <Element Molar Ratio Si/Al>

The element molar ratio Si/Al of Si and Al determined in the usual manner by an ICP emission spectroscopic analysis (ICP emission spectroscopic apparatus P-4010, manufactured by Hitachi, Ltd.) was 0.5.

### <Powder X-ray Diffraction>

Powder X-ray diffraction of sample E was performed by the method same as in Production Example 1. Figure 3 shows a powder X-ray diffraction spectrum of sample E. There were broad peaks in the vicinities of 2θ=4.8°, 9.7°, 14.0°, 18.3°, 27.3°, and 40.8°. There was no broad peak observed in the vicinities of 2θ=20° and 35°.

### <BET Specific Surface Area, Total Pore Volume, And Average Pore Diameter>

The BET specific surface, total pore volume, and average pore diameter were measured based on nitrogen adsorption capacity by the method same as in Production Example 1.

As the results of evaluations on sample E, the BET specific surface area was 323 m²/g, the total pore volume was 0.22 cm³/g, and the average pore diameter was 2.7 nm.

### <Transmission Electron Micrograph (TEM) Observation>

Figure 5 shows a transmission electron micrograph (TEM) of sample E observed at 100,000x magnification according to the method same as in Production Example 1. As shown in Figure 5, tubular objects were formed, and the lengths of the tubular bodies 10a in the longitudinal direction thereof were approximately from 1 nm to 10 µm, the outer diameters thereof were approximately from 1.5 nm to 3.0 nm, and the inner diameters thereof were approximately from 0.7 nm to 1.4 nm.

### <Moisture Content>

After sample E was heated and maintained at 120°C in an atmospheric pressure for 6 hours, the moisture content of sample E was measured by the Karl-Fischer method, which was found to be 3 mass%.

### <Metal Ion Adsorption Capacity in Water>

Mn2⁺ ion adsorption capacity in water was evaluated according to the method same as in Production Example 1. Sample E exhibited substantially the same metal ion adsorption capacity as sample A.

### [Example 1]

### <Production of Cathode>

To 100 parts by mass of an isopropyl alcohol dispersion liquid (50 g/L) of the specific aluminum silicate (sample A) produced in Production Example 1, 100 parts by mass of a LiMn₂O₄ powder with an average particle diameter of 20 µm and a maximum particle diameter of 80 µm was added. The mixture was stirred and mixed using a planetary mixer. The resultant mixture was then dried in a warm-air dryer at 60°C for 12 hours, thereby producing a cathode material A.

The cathode material A was mixed with a 1-methyl-2-pyrrolidone solution of polyvinylidene-fluoride and natural graphite, and kneaded thoroughly to yield a cathode slurry. The mixing ratio by mass of LiMn₂O₄, natural graphite, and polyvinylidene-fluoride was set at 90:6:4. The slurry was applied by a doctor blade method onto a surface of a cathode current collector made of an aluminum foil with a thickness of 20 µm so as to attain a coating amount after drying of 250 g/m². The cathode was dried at 100°C for 2 hours.

### <Production of Anode>

An anode was produced by the following method. An artificial graphite powder with an average particle diameter of 10 µm was used as an anode active material. The artificial graphite powder and polyvinylidene-fluoride were mixed at a mass ratio of 90:10, to which 1-methyl-2-pyrrolidone was added as an organic solvent. The mixture was kneaded thoroughly to yield an anode slurry. The slurry was applied onto a surface of an anode current collector made of a copper foil having a thickness of 10 µm by a doctor blade method to have a coating amount after drying of 75 g/m². The product was dried at 100°C for 2 hours, thereby obtaining an anode.

### <Production of Lithium Ion Secondary Battery>

An aluminum laminate cell was produced using as a separator a polyethylene porous sheet having a thickness of 25 µm, and, as an electrolyte solution, a solution obtained by dissolving LiPF₆ at a concentration of 1 mol/L in a mixed solvent of diethyl carbonate and ethylene carbonate mixed at a volume ratio of 1:1. The aluminum laminate cell refers to a lithium ion secondary battery using a 3-layer laminate film composed of nylon film-aluminum foil-modified polyolefin film as an outer package material, in which the cathode, anode, separator, electrolyte solution, *etc.* are encapsulated.

### <Measurement of Battery Properties>

Initial capacity, charge and discharge characteristics, and impedance of the lithium ion secondary battery produced as above were measured by the following methods. Thereafter, the battery was left standing in a thermostatic chamber at 50°C for a week, and a charge and discharge measurement, and an impedance measurement were conducted again.

### (Measurement of Initial Capacity)

The produced lithium ion secondary battery was connected with a charge and discharge measurement apparatus (TOSCAT-3100, manufactured by Toyo System Co. Ltd.), and charged at a constant current of 0.2 C up to 4.2 V, wherein 1 C is a theoretical current, at which full charge is reached in 1 hour, calculated from the amount of an active substance, and then charged at a constant voltage of 4.2 V until the current decreased to 0.01 mA. After charging, the lithium ion secondary battery was left standing for 30 min, and then it was discharged at a constant current of 0.2 C until the voltage of the lithium ion secondary battery reached 3 V. After discharging, the battery was left standing for 30 min before a next charge. The above operation was repeated twice, and the discharge capacity at the 2nd operation was defined as the discharge capacity of the battery.

The cell using sample A in a cathode material exhibited similar initial capacity compared to a cell not using sample A.

### (Measurement of Charge and Discharge Characteristics)

A battery was charged at a constant current of 0.2 C up to 4.2 V, and then charged at a constant voltage of 4.2 V until the current decreased to 0.01 mA. After charging, the lithium ion secondary battery was left standing for 30 min, and then it was discharged at a constant current of 0.5 C until the voltage of the same reached 3 V. After charging under the same charging conditions, discharge capacity was measured at a current of 1 C, 2 C, 3 C, or 5 C, and the discharge condition dependency of the discharge capacity was evaluated.

The cell using sample A in a cathode material exhibited a smaller decrease rate of discharge capacity compared to a cell not using sample A.

### (Impedance Measurement)

The lithium ion secondary battery was left standing for 30 min after the measurement of charge and discharge characteristics, then a Cole-Cole Diagram was prepared using a digital multimeter (a combination of HZ-5000 manufactured by Hokuto Denko Corp. and a frequency response analyzer), and impedance at a frequency of 1 kHz was compared as a representative value.

The cell using sample A in a cathode material exhibited a smaller increase rate of impedance after storage at 50°C for a week compared to a cell not using sample A.

From the measurement results of initial capacity, charge and discharge characteristics, and impedance, it was confirmed that sample A applied to the cathode surface contributes to extension of the cell life or improvement of safety. The above is presumably owing to adsorption of impurities having dissolved out from a cathode as indicated by the measurement result of the ion adsorption capacity of sample A.

### [Example 2]

### <Production of Cathode>

A cathode active material used in this Example was a LiMn₂O₄ powder having an average particle diameter of 20 µm and a maximum particle diameter of 80 µm. The cathode active material was mixed with a 1-methyl-2-pyrrolidone solution of polyvinylidene-fluoride and natural graphite, and kneaded thoroughly to yield a cathode slurry. The mixing ratio by mass of LiMn₂O₄, natural graphite, and polyvinylidene-fluoride was set at 90:6:4. The slurry was applied onto a surface of a cathode current collector made of an aluminum foil having a thickness of 20 µm by a doctor blade method to have a coating amount after drying of 250 g/m². The resultant was dried at 100°C for 2 hours, thereby obtaining a cathode.

### <Production of Anode>

An anode was produced by the following method. An artificial graphite powder having an average particle diameter of 10 µm was used as an anode active material. The artificial graphite powder and polyvinylidene-fluoride were mixed at a mass ratio of 90:10, to which 1-methyl-2-pyrrolidone was added as an organic solvent. The mixture was kneaded thoroughly to yield an anode slurry. The slurry was applied onto a surface of an anode current collector made of a copper foil having a thickness of 10 µm by a doctor blade method to have a coating amount after drying of 75 g/m². The product was dried at 100°C for 2 hours.

A specific aluminum silicate dispersion liquid was prepared by adding polyvinylidene-fluoride as a binder to a 15 mass% aqueous dispersion liquid of the specific aluminum silicate (sample A) produced in Production Example 1 at 5 mass% with reference to sample A, and was applied onto the anode sheet by a doctor blade method, followed by drying in vacuum at 120°C, thereby obtaining an anode. The applied amount of sample A on the anode was 5 g/m².

### <Production of Lithium Ion Secondary Battery >

An aluminum laminate cell was produced using as a separator a polyethylene porous sheet having a thickness of 25 µm, and, as an electrolyte solution, a solution obtained by dissolving LiPF₆ in a mixed solvent of diethyl carbonate and ethylene carbonate mixed at a volume ratio of 1:1 in a concentration of 1 mol/L. The aluminum laminate cell refers to a lithium ion secondary battery using a 3-layer laminate film composed of nylon film-aluminum foil-modified polyolefin film as an outer package material, in which the cathode, anode, separator, electrolyte solution, *etc.* are encapsulated.

### <Measurement of Battery Properties>

Initial capacity, charge and discharge characteristics, and impedance of the lithium ion secondary battery produced as above were measured by the following methods. Thereafter, the battery was left standing in a thermostatic chamber at 50°C for a week, and a charge and discharge measurement, and an impedance measurement were conducted again.

### (Measurement of Initial Capacity)

The produced lithium ion secondary battery was connected with a charge and discharge measurement apparatus (TOSCAT-3100, manufactured by Toyo System Co. Ltd.), and charged at a constant current of 0.2 C up to 4.2 V, wherein 1 C is a theoretical current, at which full charge is reached in 1 hour, calculated from the amount of an active substance, and then charged at a constant voltage of 4.2 V until the current decreased to 0.01 mA. After the charging, the lithium ion secondary battery was left standing for 30 min, and then it was discharged at a constant current of 0.2 C until the voltage of the lithium ion secondary battery reached 3 V. After the discharging, the battery was left standing for 30 min before a next charge. The above operation was repeated twice, and the discharge capacity at the 2nd operation was defined as the discharge capacity of the battery.

A cell having the anode coated with sample A exhibited similar initial capacity compared to a cell not coated with sample A.

### (Measurement of Charge and Discharge Characteristics)

The battery was charged at a constant current of 0.2 C up to 4.2 V, and then charged at a constant voltage of 4.2 V until the current decreased to 0.01 mA. After the charging, the lithium ion secondary battery was left standing for 30 min, and then it was discharged at a constant current of 0.5 C until the voltage of the same reached 3 V. After the charging under the same charging conditions, discharge capacity was measured at a current of 1 C, 2 C, 3 C, or 5 C, and the discharge condition dependency of the discharge capacity was evaluated.

The cell having the anode coated with sample A exhibited a smaller decrease rate of discharge capacity compared to a cell not coated with sample A.

### (Impedance Measurement)

The lithium ion secondary battery was left standing for 30 min after the measurement of charge and discharge characteristics, then a Cole-Cole Diagram was prepared using a digital multimeter (a combination of HZ-5000 manufactured by Hokuto Denko Corp. and a frequency response analyzer), and impedance at a frequency of 1 kHz was compared as a representative value.

The cell having the anode coated with sample A exhibited a smaller increase rate of impedance after storage at 50°C for a week compared to a cell not coated with sample A.

From the measurement results of initial capacity, charge and discharge characteristics, and impedance, it was confirmed that sample A applied to the anode surface contributes to extension of the cell life and improvement of safety. The above is presumably owing to the adsorption of impurities having dissolved out from a cathode as indicated by the measurement result of the ion adsorption capacity of sample A.

### [Example 3]

### <Production of Cathode>

A cathode active material used in this Example was a LiMn₂O₄ powder having an average particle diameter of 20 µm and a maximum particle diameter of 80 µm. The cathode active material was mixed with a 1-methyl-2-pyrrolidone solution of polyvinylidene-fluoride and natural graphite, and kneaded thoroughly to yield a cathode slurry. The mixing ratio by mass of LiMn₂O₄, natural graphite, and polyvinylidene-fluoride was set at 90:6:4. The slurry was applied onto a surface of a cathode current collector made of an aluminum foil having a thickness of 20 µm by a doctor blade method to a coating amount after drying of 250 g/m². The cathode was dried at 100°C for 2 hours.

A specific aluminum silicate dispersion liquid (a dispersion liquid containing a binder for a lithium ion secondary battery containing the specific aluminum silicate according to the invention) was prepared by adding polyvinylidene-fluoride as a binder compound to a 15 mass% aqueous dispersion liquid of the specific aluminum silicate (sample A) produced in Production Example 1 at 5 mass% with reference to sample A, and was applied onto the cathode sheet by a doctor blade method, followed by drying in vacuum at 120°C, thereby obtaining a cathode A. The applied amount of sample A onto the cathode A was 5 g/m².

### <Production of Anode>

An anode was produced by the following method. An artificial graphite powder having an average particle diameter of 10 µm was used as an anode active material. The artificial graphite powder and polyvinylidene-fluoride were mixed at a mass ratio of 90:10, to which 1-methyl-2-pyrrolidone was added as an organic solvent. The mixture was kneaded thoroughly to yield an anode slurry. The slurry was applied onto a surface of an anode current collector made of a copper foil having a thickness of 10 µm by a doctor blade method to have a coating amount after drying of 75 g/m². The product was dried at 100°C for 2 hours, thereby obtaining an anode.

### <Production of Lithium Ion Secondary Battery

An aluminum laminate cell was produced using as a separator a polyethylene porous sheet having a thickness of 25 µm, and, as an electrolyte solution, a solution obtained by dissolving LiPF₆ in a mixed solvent of diethyl carbonate and ethylene carbonate mixed at a volume ratio of 1:1 in a concentration of 1 mol/L. The aluminum laminate cell refers to a lithium ion secondary battery using a 3-layer laminate film composed of nylon film-aluminum foil-modified polyolefin film as an outer package material, in which the cathode, anode, separator, electrolyte solution, *etc.* are encapsulated.

### <Measurement of Battery Properties>

Initial capacity, charge and discharge characteristics, and impedance of the lithium ion secondary battery produced as above were measured by the following methods. Thereafter, the battery was left standing in a thermostatic chamber at 50°C for a week, and a charge and discharge measurement, and an impedance measurement were conducted again.

### (Measurement of Initial Capacity)

The produced lithium ion secondary battery was connected with a charge and discharge measurement apparatus (TOSCAT-3100, manufactured by Toyo System Co. Ltd.), and charged at a constant current of 0.2 C up to 4.2 V, wherein 1 C is a theoretical current at which full charge is reached in 1 hour, calculated from the amount of an active substance, and then charged at a constant voltage of 4.2 V until the current decreased to 0.01 mA. After the charging, the lithium ion secondary battery was left standing for 30 min, and then it was discharged at a constant current of 0.2 C until the voltage of the lithium ion secondary battery reached 3 V. After the discharging, the battery was left standing for 30 min before a next charge. The above operation was repeated twice, and the discharge capacity at the 2nd operation was defined as the discharge capacity of the battery.

The cell having the cathode coated with sample A exhibited similar initial capacity compared to a cell not coated with sample A.

### (Measurement of Charge and Discharge Characteristics)

The battery was charged at a constant current of 0.2 C up to 4.2 V, and then charged at a constant voltage of 4.2 V until the current decreased to 0.01 mA. After the charging, the lithium ion secondary battery was left standing for 30 min, and then it was discharged at a constant current of 0.5 C until the voltage of the same reached 3 V. After the charging under the same charging conditions, discharge capacity was measured at a current of 1 C, 2 C, 3 C, or 5 C, and the discharge condition dependency of the discharge capacity was evaluated.

The cell having the cathode coated with sample A exhibited a smaller decrease rate of discharge capacity compared to a cell not coated with sample A.

### (Impedance Measurement)

The lithium ion secondary battery was left standing for 30 min after the measurement of charge and discharge characteristics, then a Cole-Cole Diagram was prepared using a digital multimeter (a combination of HZ-5000 manufactured by Hokuto Denko Corp. and a frequency response analyzer), and impedance at a frequency of 1 kHz was compared as a representative value.

The cell having the cathode coated with sample A exhibited a smaller increase rate of impedance after storage at 50°C for a week compared to a cell not coated with sample A.

From the measurement results of initial capacity, charge and discharge characteristics, and impedance, it was confirmed that sample A applied to the cathode surface contributes to extension of the cell life and improvement of safety. The above is presumably owing to adsorption of impurities having dissolved out from a cathode as indicated by the measurement result of the ion adsorption capacity of sample A.

### [Example 4]

### <Production of Separator for Lithium Ion Secondary Battery>

A specific aluminum silicate dispersion liquid was prepared by adding polyvinylidene-fluoride as a binder to an 8 mass% aqueous dispersion liquid of the specific aluminum silicate (sample A) produced in Production Example 1 at 5 mass% with reference to sample A. The obtained specific aluminum silicate dispersion liquid was applied onto one surface of a 25 µm-thick porous polyethylene sheet by a doctor blade method and dried in vacuum at 100°C. This was designated as separator A. The applied amount of sample A on the separator A was 5 g/m².

### <Production of Lithium Ion Secondary Battery

An aluminum laminate cell was produced using, as an electrolyte solution, a solution obtained by dissolving LiPF₆ in a mixed solvent of diethyl carbonate and ethylene carbonate mixed at a volume ratio of 1:1 in a concentration of 1 mol/L. The aluminum laminate cell refers to a lithium ion secondary battery (hereinafter also referred to simply as "cell") using a 3-layer laminate film composed of nylon film-aluminum foil-modified polyolefin film as an outer package material, in which the cathode, anode, separator, electrolyte solution, *etc.* are encapsulated.

The lithium ion secondary battery was configured in such manner that a surface of the separator A, on which the specific aluminum silicate had been applied, faced the cathode.

### <Measurement of Battery Properties>

Initial capacity, charge and discharge characteristics, and impedance of the lithium ion secondary battery produced as above were measured by the following methods. Thereafter, the battery was left standing in a thermostatic chamber at 50°C for a week, and a charge and discharge measurement, and an impedance measurement were conducted again.

### (Measurement of Initial Capacity)

The produced lithium ion secondary battery was connected with a charge and discharge measurement apparatus (TOSCAT-3100, manufactured by Toyo System Co. Ltd.), and charged at a constant current of 0.2 C up to 4.2 V, wherein 1 C is a theoretical current at which full charge is reached in 1 hour, calculated from the amount of an active substance, and then charged at a constant voltage of 4.2 V until the current decreased to 0.01 mA. After the charging, the lithium ion secondary battery was left standing for 30 min, and then it was discharged at a constant current of 0.2 C until the voltage of the lithium ion secondary battery reached 3 V. After the discharging, the battery was left standing for 30 min before a next charge. The above operation was repeated twice, and the discharge capacity at the 2nd operation was defined as the discharge capacity of the battery.

The cell produced using the separator coated with sample A exhibited a similar initial capacity compared to a cell produced using a separator not coated with sample A.

### (Measurement of Charge and Discharge Characteristics)

The battery was charged at a constant current of 0.2 C up to 4.2 V, and then charged at a constant voltage of 4.2 V until the current decreased to 0.01 mA. After the charging, the lithium ion secondary battery was left standing for 30 min, and then it was discharged at a constant current of 0.5 C until the voltage of the same reached 3 V. After the charging under the same conditions, discharge capacity was measured at a current of 1 C, 2 C, 3 C, or 5 C, and the discharge condition dependency of the discharge capacity was evaluated.

The cell produced using the separator coated with sample A exhibited a smaller decrease rate of discharge capacity after storage at 50°C for a week in any of the discharge conditions compared to a cell produced using a separator not coated with sample A.

### (Impedance Measurement)

The lithium ion secondary battery was left standing for 30 min after the measurement of charge and discharge characteristics, then a Cole-Cole Diagram was prepared using a digital multimeter (a combination of HZ-5000 manufactured by Hokuto Denko Corp. and a frequency response analyzer), and impedance at a frequency of 1 kHz was compared as a representative value.

The cell produced using the separator coated with sample A exhibited a smaller increase rate of impedance after storage at 50°C for a week compared to a cell produced using a separator not coated with sample A.

From the measurement results of initial capacity, charge and discharge characteristics, and impedance, it can be found that sample A in a cell contributed to extension of the cell life and improvement of safety by, for example, adsorbing impurities having dissolved out from a cathode.

Meanwhile, a separator was produced and evaluated in the same manner as above except that sample E was used instead of sample A, and similar results as with sample A were obtained.

### [Example 5]

### <Metal Ion Adsorption Capacity in Model Electrolyte Solution 1>

Considering possible use in a lithium ion secondary battery, metal ion adsorption capacity was measured in a model electrolyte solution. A model electrolyte solution was prepared by using, as a solvent, a mixed solution of diethyl carbonate (DEC) and ethylene carbonate (EC) at a ratio by volume of DEC/EC=1/1, and adding, as a solute, nickel tetrafluoroborate to an initial Ni²⁺ ion concentration of 100 ppm.

Then, 30 mL of the model electrolyte solution was placed in a glass bottle, to which 0.3 g of sample A was charged. The resultant solution was stirred for a few minutes and then left standing for a few hours. The change in concentrations before and after addition of the sample was measured by an ICP emission spectroscopic analysis (ICP emission spectroscopic apparatus: SPS5100 manufactured by SII NanoTechnology Inc.). An acid degradation (microwave method) was performed as a pretreatment for a measurement specimen.

In stead of sample A as above, Ni²⁺ adsorption amounts were measured using sample C, sample D, sample E, and a commercial product of zeolite 13X (MOLECULAR SIEVES 13X, Si/Al molar ratio =1.2, produced by Wako Pure Chemical Industries, Ltd.) as sample F. The results are shown in Table 3.

**[Table 3]**

| Material | | Ni²⁺ Concentration after addition of the material [ppm] |
|---|---|---|
| Sample A | Specific aluminum silicate described in Production Example 1 | 20 |
| Sample C | Silica gel | 100 |
| Sample D | Zeolite 4A | 85 |
| Sample E | Specific aluminum silicate described in Production Example 2 | 10 |
| Sample F | Zeolite 13X | 70 |

As shown in Table 3, the specific aluminum silicates described in Production Example 1 and Production Example 2 exhibited Ni²⁺ ion adsorption capacity superior to those of silica gel, zeolite 4A, and zeolite 13X.

### <Metal Ion Adsorption Capacity in Model Electrolyte Solution 2>

The Ni²⁺ ion adsorption capacity in a model electrolyte solution was measured in the same manner as the method described above, except that the addition amount of sample A was changed to the concentrations shown in Table 4.

**[Table 4]**

| Addition amount of Sample A [mass%] | Ni²⁺ Concentration after addition of Sample A [ppm] |
|---|---|
| 0.0 | 100 |
| 1.0 | 20 |
| 2.0 | 5 |

As shown in Table 4, when sample A was added at 1.0 mass%, 80% of the Ni²⁺ ion was adsorbed. When sample A was added at 2.0 mass%, 95% of the Ni²⁺ ion was adsorbed.

From the above, it is clear that a specific aluminum silicate can adsorb an unwanted metal ion selectively, and by composing an electrolyte solution for a lithium ion secondary battery containing the same, an increase in the concentration of an unwanted metal ion can be suppressed.

## Claims

1. Use of a material in a lithium ion secondary battery, the material comprising an aluminum silicate having an element molar ratio Si/Al of silicon (Si) to aluminum (Al) of 0.4 to 0.6, wherein the aluminum silicate has a peak in the vicinity of 3 ppm in an ²⁷Al-NMR spectrum.

2. The use according to claim 1, wherein the aluminum silicate has peaks in the vicinities of -78 ppm and -85 ppm in a ²⁹Si-NMR spectrum.

3. The use according to claim 1 or 2, wherein the aluminum silicate has peaks in the vicinities of 2θ=26.9° and 40.3° and does not have peaks in the vicinities of 2θ=20° and 35° which are derived from a lamellar clay mineral, in a powder X-ray diffraction spectrum using a CuKa ray as a source X-ray.

4. The use according to any one of claims 1 to 3, wherein an area ratio (Peak B/Peak A) of a peak B in the vicinity of -85 ppm to a peak A in the vicinity of-78 ppm of the aluminum silicate in the ²⁹Si-NMR spectrum is from 2.0 to 9.0.

5. The use according to any one of claims 1 to 4, wherein a BET specific surface area of the aluminum silicate is 250 m²/g or more.

6. An anode of a lithium ion secondary battery, comprising the material as defined in any one of claims 1 to 5.

7. A lithium ion secondary battery, comprising:
an anode for a lithium ion secondary battery as defined in claim 6;
a cathode; and
an electrolyte.

8. A cathode of a lithium ion secondary battery, comprising:
a current collector; and
a cathode layer which comprises the material as defined in any one of claims 1 to 5 and which is provided on the current collector.

9. A lithium ion secondary battery, comprising:
the cathode for a lithium ion secondary battery according to claim 8;
an anode; and
an electrolyte.

10. An electrolyte solution of a lithium ion secondary battery, comprising:
an electrolyte;
an organic solvent; and
the material as defined in any one of claims 1 to 5.

11. A separator of a lithium ion secondary battery, comprising:
a separator substrate; and
the material as defined in any one of claims 1 to 5.

## Patentansprüche

1. Verwendung eines Materials in einer Lithium-Ionen-Sekundärbatterie, wobei das Material ein Aluminiumsilikat mit einem Elementenmolverhältnis Si/Al von Silicium (Si) zu Aluminium (Al) von 0,4 bis 0,6 aufweist, wobei das Aluminiumsilikat einen Peak in der Nähe von 3 ppm in einem ²⁷Al-NMR-Spektrum aufweist.

2. Verwendung gemäß Anspruch 1, wobei das Aluminiumsilikat Peaks in der Nähe von -78 ppm und -85 ppm in einem ²⁹Si-NMR-Spektrum aufweist.

3. Verwendung gemäß Anspruch 1 oder 2, wobei das Aluminiumsilikat Peaks in der Nähe von 2θ = 26,9° und 40,3° und keine Peaks in der Nähe von 2θ = 20° und 35°, die von einem plättchenförmigen Tonmineral stammen, in einem Pulverröntgenbeugungsspektrum unter Verwendung einer CuKα-Strahlung als Röntgenquelle aufweist.

4. Verwendung gemäß irgendeinem der Ansprüche 1 bis 3, wobei ein Flächenverhältnis (Peak B/Peak A) eines Peaks B in der Nähe von -85 ppm zu einem Peak A in der Nähe von -78 ppm des Aluminiumsilikats in dem ²⁹Si-NMR-Spektrum 2,0 bis 9,0 beträgt.

5. Verwendung gemäß irgendeinem der Ansprüche 1 bis 4, wobei eine spezifische BET-Oberfläche des Aluminiumsilikats 250 m²/g oder mehr beträgt.

6. Anode einer Lithium-Ionen-Sekundärbatterie, umfassend das in irgendeinem der Ansprüche 1 bis 5 definierte Material.

7. Lithium-Ionen-Sekundärbatterie, umfassend:
eine Anode für eine Lithium-Ionen-Sekundärbatterie wie in Anspruch 6 definiert,
eine Kathode und
einen Elektrolyten.

8. Kathode einer Lithium-Ionen-Sekundärbatterie, umfassend:
einen Stromableiter und
eine Kathodenschicht, die das in irgendeinem der Ansprüche 1 bis 5 definierte Material umfasst und die auf dem Stromableiter vorgesehen ist.

9. Lithium-Ionen-Sekundärbatterie, umfassend:
die Kathode für eine Lithium-Ionen-Sekundärbatterie gemäß Anspruch 8,
eine Anode und
einen Elektrolyten.

10. Elektrolytlösung einer Lithium-Ionen-Sekundärbatterie, umfassend:
einen Elektrolyten,
ein organisches Lösungsmittel und
das in irgendeinem der Ansprüche 1 bis 5 definierte Material.

11. Separator einer Lithium-Ionen-Sekundärbatterie, umfassend:
ein Separatorsubstrat und
das in irgendeinem der Ansprüche 1 bis 5 definierte Material.

## Revendications

1. Utilisation d'un matériau dans une batterie secondaire à ions lithium, le matériau comprenant un silicate d'aluminium ayant un rapport molaire élémentaire Si/Al de silicium (Si) à aluminium (Al9 de 0,4 à 0,6, dans lequel le silicate d'aluminium a un pic dans le voisinage de 3 ppm dans un spectre RMN-²⁷Al.

2. L'utilisation selon la revendication 1, dans laquelle le silicate d'aluminium a des pics dans les voisinages de -78 ppm et -85 ppm dans un spectre RMN-²⁹Si.

3. L'utilisation selon la revendication 1 ou 2, dans laquelle le silicate d'aluminium a des pics dans les voisinages de 2θ=26,9° et 40,3° et n'a pas de pics dans les voisinages de 2θ=20° et 35° qui sont dérivés d'une argile minérale lamellaire, dans un spectre de diffraction de rayons X sur poudre en utilisant un rayonnement CuKα comme une source de rayons X.

4. L'utilisation selon l'une quelconque des revendications 1 à 3, dans laquelle un rapport d'aire (Pic B/Pic A) d'un pic B dans le voisinage de -85 ppm à un pic A dans le voisinage de -78 ppm du silicate d'aluminium dans le spectre RMN-²⁹Si est de 2,0 à 9,0.

5. L'utilisation selon l'une quelconque des revendications 1 à 4, dans laquelle une surface spécifique BET du silicate d'aluminium est de 250 m²/g ou plus.

6. Anode d'une batterie secondaire à ions lithium, comprenant le matériau tel que défini dans l'une quelconque des revendications 1 à 5.

7. Batterie secondaire à ions lithium, comprenant :
une anode pour une batterie secondaire à ions lithium telle que définie dans la revendication 6 ;
une cathode ; et
un électrolyte.

8. Cathode d'une batterie secondaire à ions lithium, comprenant :
un collecteur de courant ; et
une couche cathodique qui comprend le matériau tel que défini dans l'une quelconque des revendications 1 à 5 et qui est fournie sur le collecteur de courant.

9. Batterie secondaire à ions lithium, comprenant :
la cathode pour une batterie secondaire à ions lithium selon la revendication 8 ;
une anode ; et
un électrolyte.

10. Solution d'électrolyte d'une batterie secondaire à ions lithium, comprenant : une batterie secondaire à ions lithium, comprenant :
un électrolyte ;
un solvant organique ; et
le matériau tel que défini dans l'une quelconque des revendications 1 à 5.

11. Séparateur d'une batterie secondaire à ions lithium, comprenant :
un substrat de séparateur ; et
le matériau tel que défini dans l'une quelconque des revendications 1 à 5.
